# EUROPEAN PATENT APPLICATION

(11) **EP 4 369 750 A1**
(43) Date of publication of application: **15.05.2024**
(21) Application number: 22852276.9
(22) Date of filing: 04.08.2022
(51) Int. Cl.: H04W 4/38

(54) **METHOD, COMMUNICATION APPARATUS AND SYSTEM FOR PROVIDING COMMUNICATION SENSING SERVICE**

(30) Priority: 04.08.2021 CN 202110893619
(71) Applicant: Huawei Technologies Co., Ltd., Longgang Shenzhen, Guangdong 518129 (CN)
(72) Inventor: YING, Jiangwei, Shenzhen, Guangdong 518129 (CN); YANG, Yanmei, Shenzhen, Guangdong 518129 (CN); ZHANG, Wanqiang, Shenzhen, Guangdong 518129 (CN); TAN, Shiyong, Shenzhen, Guangdong 518129 (CN)
(74) Representative: Goddar, Heinz J.
(86) International application number: PCT/CN2022/110119
(87) International publication number: WO 2023/011564

(57) **Abstract**

This application provides a method for providing a communication sensing service. In the method, a first sensing network element in a wireless communication network sends a sensing control request message to a second sensing network element, and controls the second sensing network element to detect and/or collect sensing data. After obtaining the sensing data through detection, the second sensing network element provides the sensing data to the first sensing network element, and the first sensing network element provides a sensing service based on the sensing data, to provide an end-to-end sensing service.

## Description

This application claims priority to Chinese Patent Application No. 202110893619.X, filed with the China National Intellectual Property Administration on August 4, 2021 and entitled "METHOD FOR PROVIDING COMMUNICATION SENSING SERVICE, COMMUNICATION APPARATUS, AND SYSTEM", which is incorporated herein by reference in its entirety.

### TECHNICAL FIELD

This application relates to the field of wireless communication technologies, and more specifically, to a method for providing a communication sensing service, a communication apparatus, and a system.

### BACKGROUND

With the evolution of communication technologies, a sensing capability is derived from a communication frequency band, especially a millimeter-wave frequency band. When a base station or a terminal has a sensing capability, a communication system can perform sensing and identification on a specific region, a specific object, a specific event, or the like. A communication network has advantages such as wide coverage, long-distance coverage, large bandwidth, high precision, and low delay, so that the communication network can have an ultra-high sensing capability, which exceeds a sensing capability of an existing radar. If the communication network uses this sensing capability as a new capability, sensing requirements in many scenarios can be met.

At present, a radio access network (radio access network, RAN) or the terminal having a sensing capability is only a prerequisite for the communication network to provide a sensing requirement. How to convert the sensing capability to an end-to-end service and open the end-to-end service to users to resolve an actual problem is still in an exploration stage.

### SUMMARY

This application provides a method for providing a communication sensing service, a communication apparatus, and a system, to provide an end-to-end communication sensing service.

According to a first aspect, a method for providing a communication sensing service is provided. The method includes:

A first sensing network element sends a sensing control request message to a second sensing network element, where the sensing control request message is used to request the second sensing network element to perform a sensing operation.

The first sensing network element receives first sensing data from the second sensing network element.

The first sensing network element provides a first sensing service based on the first sensing data.

In this application, the sensing operation may represent the following meanings:
a process in which the second sensing network element sends a radio signal to a specific region, a specific location, or a specific object, and receives an echo signal; and/or a process of obtaining sensing data based on the echo signal.

In the technical solutions of this application, the first sensing network element controls the second sensing network element to perform the sensing operation, to obtain the sensing data. The first sensing network element receives the sensing data from the second sensing network element, and provides a sensing service based on the sensing data, so that a sensing capability can be turned to an end-to-end service.

With reference to the first aspect, in some implementations of the first aspect, the method further includes:
The first sensing network element receives a request message from a first network element, where the request message is used to request the first sensing service, and the first network element is a core network element, an external application server, or a terminal device.

That the first sensing network element provides a first sensing service based on the first sensing data includes:
The first sensing network element sends second sensing data of the first sensing service to the first network element based on the first sensing data.

In this implementation, the first sensing network element can meet a requirement of a sensing service of the first network element, bring another dimension of service capability to a mobile network element, and improve network performance.

With reference to the first aspect, in some implementations of the first aspect, that the first sensing network element obtains sensing control information based on a service type and/or a service requirement of the first sensing service includes:

The first sensing network element performs one or more of the following operations based on the service type and/or the service requirement of the first sensing service, to obtain the sensing control information:
The first sensing network element obtains a second sensing distance based on a first sensing distance.

The first sensing network element obtains a second sensing region based on a first sensing region.

The first sensing network element obtains a second sensing location point based on a first sensing location point.

The first sensing network element obtains a second sensing UE identifier based on a first sensing UE identifier.

The first sensing network element obtains second sensing time information based on first sensing time information.

The first sensing network element obtains a second sensing feedback manner based on a first sensing feedback manner.

The first sensing network element obtains a second feedback periodicity based on a first feedback periodicity.

In this implementation, the first sensing network element obtains the sensing control information based on the service type and/or the service requirement of the first sensing service, and then sends the sensing control information to the second sensing network element, to assist the second sensing network element in understanding a requirement of the sensing service.

In addition, a sensing service that meets a capability of the second sensing network element may be provided.

In addition, a redundancy of a communication system may be considered, so that the first sensing network element subsequently processes the sensing data.

In addition, the first sensing network element splits the sensing requirement, to prevent the second sensing network element from receiving an invalid sensing instruction.

With reference to the first aspect, in some implementations of the first aspect, that the first sensing network element obtains sensing control information based on a service type and/or a service requirement of the first sensing service includes:
The first sensing network element obtains a second sensing QoS requirement based on a first sensing QoS requirement.

Alternatively, the first sensing network element obtains a second sensing QoS requirement based on the service type of the first sensing service.

In this implementation, the service type of the first sensing service may assist the first sensing network element in determining a QoS requirement that meets the first sensing service, or a QoS requirement that meets the second sensing network element (that is, the second sensing QoS requirement).

With reference to the first aspect, in some implementations of the first aspect, the method further includes:
The first sensing network element obtains a sensing detection periodicity based on one or more of the following:
the service type of the first sensing service, the first sensing QoS requirement, first sensing object identification accuracy, a false alarm rate of first sensing object identification, first sensing data precision, and a first sensing data update frequency.

With reference to the first aspect, in some implementations of the first aspect, the method further includes:
The first sensing network element obtains a sensing detection periodicity based on one or more of the following:
the service type of the first sensing service, the second sensing QoS requirement, first sensing object identification accuracy, a false alarm rate of first sensing object identification, first sensing data precision, and a first sensing data update frequency.

With reference to the first aspect, in some implementations of the first aspect, the method further includes:
The first sensing network element performs one or more of the following operations:
The first sensing network element obtains a second sensing distance resolution based on a first sensing distance resolution.

The first sensing network element obtains second sensing angle measurement precision based on first sensing angle measurement precision.

The first sensing network element obtains a second sensing speed resolution based on a first sensing speed resolution.

The first sensing network element obtains second sensing object identification accuracy based on the first sensing object identification accuracy.

The first sensing network element obtains a false alarm rate of second sensing object identification based on the false alarm rate of the first sensing object identification.

In this implementation, it can be ensured that a sensing service that meets a capability of the second sensing network element is provided.

In addition, the redundancy of the communication system may be considered, so that the first sensing network element subsequently processes the sensing data.

With reference to the first aspect, in some implementations of the first aspect, the method further includes:

The first sensing network element obtains one or more of the following based on one or more of the first sensing QoS requirement, the first sensing distance, the first sensing region, a first sensing speed range, the first sensing object identification accuracy, the false alarm rate of the first sensing object identification, the first sensing data precision, and the first sensing data update frequency:
the second sensing distance resolution, the second sensing angle measurement precision, the second sensing speed resolution, the second sensing object identification accuracy, and the false alarm rate of the second sensing object identification.

In this implementation, it can be ensured that a sensing service that meets a capability of the second sensing network element is provided.

In addition, the redundancy of the communication system may be considered, so that the first sensing network element subsequently processes the sensing data.

According to a second aspect, a method for providing a communication sensing service is provided. The method includes:
A second sensing network element receives a sensing control request message from a first sensing network element, where the sensing control request message is used to request the second sensing network element to perform a sensing operation.

The second sensing network element performs the sensing operation based on the sensing control request message, to obtain first sensing data.

The second sensing network element sends the first sensing data to the first sensing network element.

With reference to the second aspect, in some implementations of the second aspect, the sensing control request message includes sensing control information, and the sensing control information is used to control the second sensing network element to perform the sensing operation indicated by the sensing control information.

With reference to the second aspect, in some implementations of the second aspect, the sensing control information includes one or more of the following:
a second sensing distance, a second sensing region, a second sensing speed range, a second sensing distance resolution, second sensing angle measurement precision, a second sensing speed resolution, a second sensing QoS requirement, a second sensing location point, a second sensing UE identifier, second sensing time information, second sensing object identification accuracy, a false alarm rate of second sensing object identification, second sensing data precision, a second sensing data update frequency, a second sensing dimension indication, a sensing detection periodicity, and a second sensing feedback manner.

With reference to the second aspect, in some implementations of the second aspect, the sensing control information includes one or more of the following: the second sensing QoS requirement, the second sensing location point, the second sensing UE identifier, the second sensing time information, the second sensing dimension indication, the sensing detection periodicity, and the second sensing feedback manner.

The second sensing QoS requirement further includes one or more of the following:
the second sensing distance, the second sensing region, the second sensing speed range, the second sensing distance resolution, the second sensing angle measurement precision, the second sensing speed resolution, the second sensing object identification accuracy, the false alarm rate of the second sensing object identification, the second sensing data precision, and the second sensing data update frequency.

With reference to the second aspect, in some implementations of the second aspect, the second sensing network element is a radio access network device or a terminal device.

According to a third aspect, a method for providing a communication sensing service is provided. The method includes:
A first sensing network element sends a sensing control request message to a second sensing network element, where the sensing control request message is used to request the second sensing network element to perform a sensing operation.

The second sensing network element receives the sensing control request message from the first sensing network element.

The second sensing network element performs the sensing operation based on the sensing control request message, to obtain first sensing data.

The second sensing network element sends the first sensing data to the first sensing network element.

The first sensing network element receives the first sensing data from the second sensing network element.

The first sensing network element provides a first sensing service based on the first sensing data.

With reference to the third aspect, in an implementation of the third aspect, the method further includes:

The first sensing network element receives a request message from a first network element, where the request message is used to request the first sensing service, and the first network element is a core network element or a terminal device.

That the first sensing network element provides a first sensing service based on the first sensing data includes:
The first sensing network element sends second sensing data of the first sensing service to the first network element based on the first sensing data.

According to a fourth aspect, a communication system for providing a communication sensing service is provided. The communication system includes:
a first sensing network element, configured to send a sensing control request message to a second sensing network element, where the sensing control request message is used to request the second sensing network element to perform a sensing operation; and
the second sensing network element, configured to receive the sensing control request message from the first sensing network element;
perform the sensing operation based on the sensing control request message, to obtain first sensing data; and
send the first sensing data to the first sensing network element.

The first sensing network element is further configured to receive the first sensing data from the second sensing network element; and
provide a first sensing service based on the first sensing data.

With reference to the fourth aspect, in an implementation of the fourth aspect, the communication system further includes:
a first network element, configured to send a request message to the first sensing network element, where the request message is used to request the first sensing service, and the first network element is a core network element, an external application server, or a terminal device.

The first sensing network element is further configured to send second sensing data of the first sensing service to the first network element based on the first sensing data.

In an implementation of any one of the foregoing aspects, the second sensing data is the first sensing data.

In an implementation of any one of the foregoing aspects, the second sensing data is obtained based on the first sensing data.

In an implementation of any one of the foregoing aspects, the request message carries sensing indication information, and the sensing indication information indicates to request a sensing service.

This implementation may provide a general instruction for the sensing service.

In an implementation of any one of the foregoing aspects, the request message carries a service type of the first sensing service.

This implementation may assist the first sensing network element in obtaining a requirement of the sensing service based on the service type.

In an implementation of any one of the foregoing aspects, the service type includes one or more of the following:
object distribution, map, driving, violation detection, object tracking, emergency event detection, object positioning, object dimension, object speed, weather forecast, human posture, and human health.

In an implementation of any one of the foregoing aspects, the violation detection is specifically vehicle violation detection, and the vehicle violation detection includes one or more of the following detections:
overspeed detection, marked lane violation detection, emergency lane violation detection, lane change violation detection, vehicle model and license plate mismatch detection, and abnormal driving route detection.

In an implementation of any one of the foregoing aspects, the violation detection type is specifically aircraft violation detection, and the aircraft violation detection includes one or more of the following detections:
overspeed flight detection, flight route violation detection, airway change violation detection, aircraft model and identity mismatch detection, and aircraft load violation detection.

In an implementation of any one of the foregoing aspects, the driving includes one or more of the following:
vehicle self-driving, vehicle semi-automatic driving, vehicle remote driving, vehicle driving assistance, aircraft self-driving, aircraft semi-automatic driving, aircraft remote driving, and aircraft driving assistance.

In an implementation of any one of the foregoing aspects, the emergency event detection includes one or more of the following:
objects entering a specific region, collision between objects, a risk of collision between objects, a disaster occurrence, and a disaster occurrence risk.

In an implementation of any one of the foregoing aspects, the weather forecast includes one or more of the following:
temperature, atmospheric pressure, humidity, rainfall, snowfall, wind speed, wind direction, cloud thickness, suspended particulate matter concentration, and air quality.

In an implementation of any one of the foregoing aspects, the human health includes one or more of the following:
breathing, heartbeat, blood pressure, weight, skin health, sleep quality, and abnormal organs.

In an implementation of any one of the foregoing aspects, the request message carries a service requirement of the first sensing service.

In an implementation of any one of the foregoing aspects, the service requirement includes one or more of the following information:
a first sensing distance, a first sensing region, a first sensing speed range, a first sensing distance resolution, first sensing angle measurement precision, a first sensing speed resolution, a first sensing quality of service QoS requirement, a first sensing location point, a first sensing user equipment UE identifier, first sensing time information, first sensing object identification accuracy, a false alarm rate of first sensing object identification, first sensing data precision, a first sensing data update frequency, a first sensing dimension indication, and a first sensing feedback manner.

In an implementation of any one of the foregoing aspects, the first sensing feedback manner includes one or more of the following:
single feedback, periodic feedback, and event-triggered feedback.

In an implementation of any one of the foregoing aspects, the first sensing QoS requirement includes one or more of the following:
a first service priority, a first data rate, and a first delay.

In an implementation of any one of the foregoing aspects, the first sensing QoS requirement includes one or more of the following:
a QoS parameter identifier, and a priority corresponding to the QoS parameter identifier.

In an implementation of any one of the foregoing aspects, the service requirement includes one or more of the following information of the first sensing service:
the first sensing QoS requirement, the first sensing location point, the first sensing UE identifier, the first sensing time information, the first sensing dimension indication, and the first sensing feedback manner.

The first sensing QoS requirement includes one or more of the following:
the first sensing distance, the first sensing region, the first sensing speed range, the first sensing distance resolution, the first sensing angle measurement precision, the first sensing speed resolution, the first sensing object identification accuracy, the false alarm rate of the first sensing object identification, the first sensing data precision, and the first sensing data update frequency.

In an implementation of any one of the foregoing aspects, when the first sensing feedback manner is the periodic feedback, the service requirement further includes a first feedback periodicity.

In an implementation of any one of the foregoing aspects, the request message carries a sensing requester identifier and/or a sensing application identifier of the first sensing service.

Alternatively, a sensing requester is sometimes referred to as a demander of a sensing service (or a sensing service) in this specification.

In an implementation of any one of the foregoing aspects, the sensing control request message includes sensing control information, and the sensing control information is used to control the second sensing network element to perform the sensing operation indicated by the sensing control information.

Optionally, in an implementation, the sensing control information includes a service type of the sensing service.

Optionally, the sensing control request message carries sensing indication information, and the sensing indication information indicates the second sensing network element to perform the sensing operation.

In an implementation of any one of the foregoing aspects, the sensing control information includes one or more of the following information:
a second sensing distance, a second sensing region, a second sensing speed range, a second sensing distance resolution, second sensing angle measurement precision, a second sensing speed resolution, a second sensing QoS requirement, a second sensing location point, a second sensing UE identifier, second sensing time information, second sensing object identification accuracy, a false alarm rate of second sensing object identification, second sensing data precision, a second sensing data update frequency, a second sensing dimension indication, a sensing detection periodicity, and a second sensing feedback manner.

In an implementation of any one of the foregoing aspects, the second sensing QoS requirement includes one or more of the following:
a second service priority, a second data rate, and a second delay.

In an implementation of any one of the foregoing aspects, the sensing control information includes one or more of the following information:
the second sensing QoS requirement, the second sensing location point, the second sensing UE identifier, the second sensing time information, the second sensing dimension indication, the sensing detection periodicity, and the second sensing feedback manner.

The second sensing QoS requirement includes one or more of the following:
the second sensing distance, the second sensing region, the second sensing speed range, the second sensing distance resolution, the second sensing angle measurement precision, the second sensing speed resolution, the second sensing object identification accuracy, the false alarm rate of the second sensing object identification, the second sensing data precision, and the second sensing data update frequency.

In an implementation of any one of the foregoing aspects, the second sensing feedback manner includes one or more of the following:
single feedback, periodic feedback, and event-triggered feedback.

In an implementation of any one of the foregoing aspects, when the second sensing feedback manner is the periodic feedback, the sensing control information further includes a second feedback periodicity.

In an implementation of any one of the foregoing aspects, the sensing control information includes:
a region sensing indication; or
a region sensing indication and the second sensing region.

In an implementation of any one of the foregoing aspects, the sensing control information includes:
a UE sensing indication and the second sensing UE identifier;
a UE sensing indication and UE location information; or
a UE sensing indication, the second sensing UE identifier, and UE location information.

In an implementation of any one of the foregoing aspects, the sensing control information includes:
a continuous tracking indication;
a continuous tracking indication and the second sensing UE identifier;
a continuous tracking indication and location information of a target object; or
a continuous tracking indication and the second sensing region.

In an implementation of any one of the foregoing aspects, the first sensing data is one of the following data obtained based on an echo signal: a time-domain digital signal, distance-speed spectrum information, location information and a speed value of a scattering point, and location information and a speed value of a target object.

In an implementation of any one of the foregoing aspects, a manner of obtaining the first sensing data includes:
obtaining the first sensing data based on the echo signal;
obtaining the time-domain digital signal based on the echo signal, and obtaining the first sensing data based on the time-domain digital signal;
obtaining the distance-speed spectrum information based on the echo signal, and obtaining the first sensing data based on the distance-speed spectrum information;
obtaining the location information and the speed value of the scattering point based on the echo signal, and obtaining the first sensing data based on the location information and the speed value of the scattering point; or
obtaining the location information and the speed value of the target object based on the echo signal, and obtaining the first sensing data based on the location information and the speed value of the target object.

In an implementation of any one of the foregoing aspects, the first network element is one of the following network elements:
a network exposure function network element, an access and mobility management function network element, an application function network element, an application server AS, or the terminal device.

For example, in NR, the network exposure function network element may be an NEF, the access and mobility management function network element may be an AMF, and the application function network element may be an AF.

In an implementation of any one of the foregoing aspects, the second sensing network element is a radio access network device or a terminal device.

For example, in NR, the second sensing network element may be a RAN.

According to a fifth aspect, a communication apparatus is provided. The communication apparatus has a function of implementing the method in any one of the first aspect or the possible implementations of the first aspect. The function may be implemented by hardware, or may be implemented by hardware executing corresponding software. The hardware or the software includes one or more units corresponding to the foregoing functions.

According to a sixth aspect, a communication apparatus is provided. The communication apparatus has a function of implementing the method in any one of the second aspect or the possible implementations of the second aspect. The function may be implemented by hardware, or may be implemented by hardware executing corresponding software. The hardware or the software includes one or more units corresponding to the foregoing functions.

According to a seventh aspect, a communication apparatus is provided, including a processor and a memory. Optionally, the communication apparatus may further include a transceiver. The memory is configured to store a computer program. The processor is configured to invoke and run the computer program stored in the memory, and control the transceiver to send or receive a signal, so that the communication apparatus performs the method in any one of the first aspect or the possible implementations of the first aspect.

For example, the communication apparatus is the first sensing network element in embodiments of this application.

According to an eighth aspect, a communication apparatus is provided, including a processor and a memory. Optionally, the communication apparatus may further include a transceiver. The memory is configured to store a computer program. The processor is configured to invoke and run the computer program stored in the memory, and control the transceiver to send or receive a signal, so that the communication apparatus performs the method in any one of the second aspect or the possible implementations of the second aspect.

For example, the communication apparatus is the second sensing network element in embodiments of this application.

According to a ninth aspect, a communication apparatus is provided, including a processor and a communication interface. The communication interface is configured to receive data and/or information, and transmit the received data and/or information to the processor. The processor processes the data and/or information. The communication interface is further configured to output the data and/or information processed by the processor, so that the method in any one of the first aspect or the possible implementations of the first aspect is performed, or the method in any one of the second aspect or the possible implementations of the second aspect is performed.

According to a tenth aspect, a computer-readable storage medium is provided, where the computer-readable storage medium stores computer instructions. When the computer instructions are run on a computer, the method in any one of the first aspect or the possible implementations of the first aspect is performed, or the method in any one of the second aspect or the possible implementations of the second aspect is performed.

According to an eleventh aspect, a computer program product is provided, where the computer program product includes computer program code. When the computer program code is run on a computer, the method in any one of the first aspect or the possible implementations of the first aspect is performed, or the method in any one of the second aspect or the possible implementations of the second aspect is performed.

According to a twelfth aspect, a wireless communication system is provided, including the communication apparatus according to the fifth aspect and the communication apparatus according to the sixth aspect.

Optionally, the wireless communication system may further include one or more core network devices. For example, the core network device may include one or more of a network exposure function network element (for example, an NEF) and an access and mobility management network element (for example, an AMF).

### BRIEF DESCRIPTION OF DRAWINGS

FIG. 1 shows an example of an architecture of a communication system applicable to an embodiment of this application;
FIG. 2 is a schematic diagram of an architecture of a communication system according to this application;
FIG. 3 is a schematic flowchart of a method for providing a communication sensing service according to this application;
FIG. 4 shows an example of providing a communication sensing service according to this application;
FIG. 5 shows another example of providing a communication sensing service according to this application;
FIG. 6 shows an example process in which an AF requests a sensing service from a first sensing network element by using an NEF;
FIG. 7 shows another example process in which an AF requests a sensing service from a first sensing network element by using an NEF;
FIG. 8 shows an example process in which an AF requests a sensing service from a first sensing network element;
FIG. 9 shows an example process in which a UE requests a sensing service from a first sensing network element by using an AMF;
FIG. 10 shows an example process in which a UE requests a sensing service from a first sensing network element;
FIG. 11 is a schematic block diagram of a communication apparatus according to this application;
FIG. 12 is a schematic diagram of a structure of a communication apparatus according to this application;
FIG. 13 shows a communication system according to this application; and
FIG. 14 is a schematic diagram of a service-based architecture.

### DESCRIPTION OF EMBODIMENTS

The following describes technical solutions of embodiments in this application with reference to accompanying drawings.

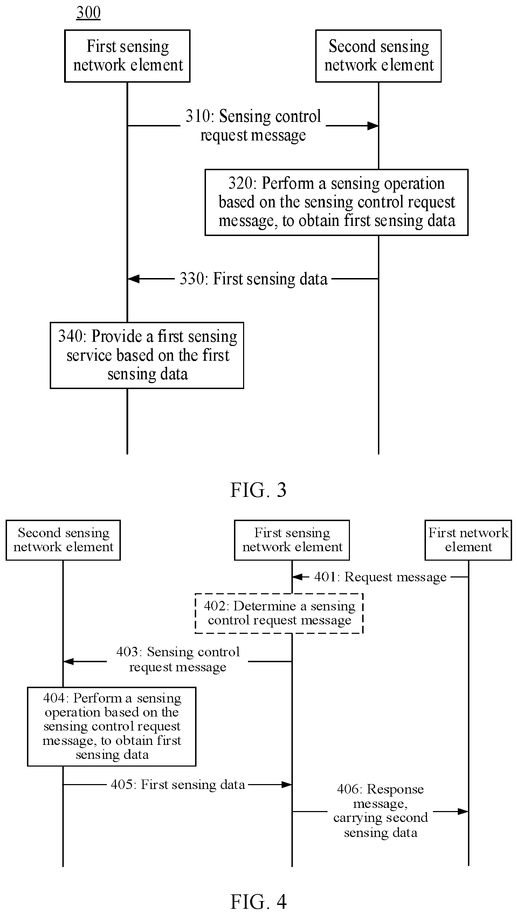

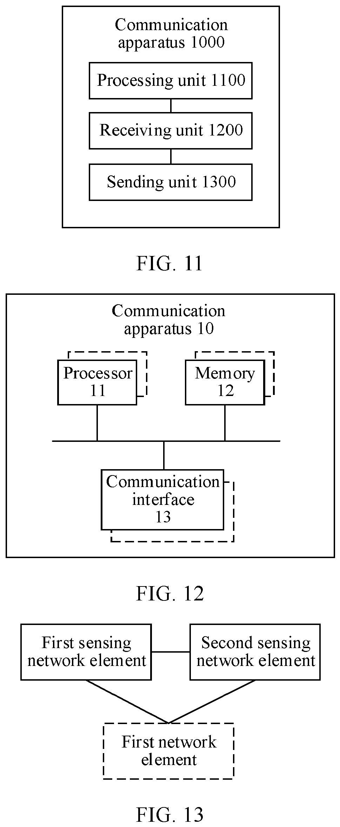

FIG. 13 shows a communication system according to this application. The communication system includes a first sensing network element and a second sensing network element. The first sensing network element is configured to send a sensing control request message to the second sensing network element, receive first sensing data from the second sensing network element, and provide a first sensing service based on the first sensing data. The second sensing network element is configured to perform a sensing operation based on the sensing control request message, to obtain the first sensing data, and send the first sensing data to the first sensing network element. For the first sensing network element in the communication system, refer to the first sensing network element in FIG. 3 to FIG. 10. For the second sensing network element in the communication system, refer to the second sensing network element in FIG. 4 to FIG. 10. Optionally, the communication system further includes a first network element. For the first network element, refer to the first network element, the core network element, or the UE in FIG. 4 to FIG. 10.

Methods in embodiments of this application may be applied to a long term evolution (long term evolution, LTE) system, a long term evolution-advanced (long term evolution-advanced, LTE-A) system, enhanced long term evolution (enhanced long term evolution, eLTE), a fifth generation (5th Generation, 5G) mobile communication system, or a new radio (New Radio, NR) system, or may be extended to a similar wireless communication system, for example, wireless fidelity (wireless fidelity, Wi-Fi), worldwide interoperability for microwave access (worldwide interoperability for microwave access, WiMAX), and a cellular system related to a 3rd generation partnership project (3rd generation partnership project, 3GPP).

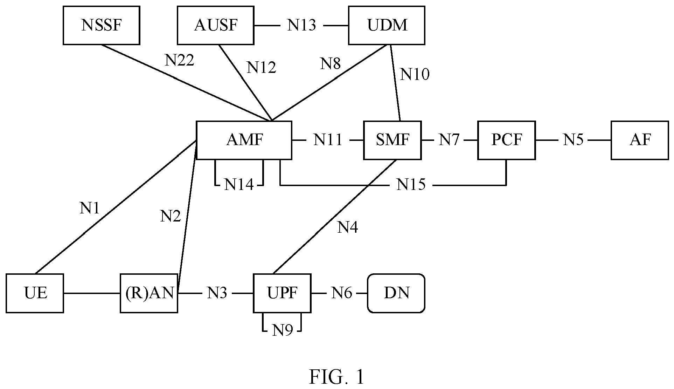

With the update of mobile communication technologies, 5G networks are constructed in a flexible and efficient manner. The 5G network may use a communication sensing capability as a new capability. For example, a system architecture of the 5G network may be shown in FIG. 1.

FIG. 1 shows an example of an architecture of a 5G communication system applicable to an embodiment of this application. Functions of a terminal device and various network entities are described below.

Terminal device: The terminal device may also be referred to as a user equipment (user equipment, UE), an access terminal, a terminal device unit (subscriber unit), a terminal device station, a mobile station, or a mobile station (mobile station, MS), a remote station, a remote terminal, a mobile device, a user terminal, a terminal (terminal), a wireless communication device, a terminal device agent, or a terminal device apparatus.

Radio access network (radio access network, RAN): The radio access network is a network including a plurality of 5G-RAN nodes, and implements a radio physical layer function, resource scheduling and radio resource management, radio access control, and a mobility management function. A 5G-RAN is connected to a UPF through a user plane interface N3, and is configured to transmit data of a terminal device. The 5G-RAN establishes a control plane signaling connection to an AMF through a control plane interface N2, to implement functions such as radio access bearer control.

AMF: The AMF is responsible for UE authentication, UE mobility management, network slice selection, and SMF selection, functions as an anchor of a signaling connection between N1 and N2, provides a route of an N1/N2 SM message for an SMF, and maintains and manages UE status information.

UPF: The UPF serves as an anchor point of a PDU session connection, and is responsible for data packet filtering, data transmission/forwarding, rate control, charging information generation, and the like of user equipment.

Unified data management (unified data management, UDM): The unified data management is mainly used to manage and control user data, for example, management of subscription information, including obtaining subscription information from a unified data repository (unified data repository, UDR) and providing the subscription information to another network element (for example, an AMF); generating an authentication credential of a third generation partnership project (third generation partnership project, 3GPP) for a UE; and registering and maintaining a network element currently serving the UE, for example, an AMF currently serving the UE (that is, a serving AMF).

Network exposure function (network exposure function, NEF): The network exposure function is used for connection and interaction between another internal network element of a core network and an external application server of the core network, to provide network capability information for the external application server, or provide information about the external application server for a core network element.

Application function (application function, AF): The application function interacts with a core network element to provide some services, for example, interacts with a policy and control function (policy and control function, PCF) to perform service policy control, interacts with an NEF to obtain some network capability information or provide some application information for a network, and provides some data network access point information for a PCF to generate routing information of a corresponding data service.

Authentication server function (authentication server function, AUSF): The authentication server function is used to perform security authentication on a UE when the UE accesses a network.

Network slice selection function (network slice selection function, NSSF): The network slice selection function selects a slice instance set for a UE and determines an AMF set and allowed NSSAI for the UE.

PCF: The PCF provides configuration policy information for a UE, and provides policy information for a control plane network element (for example, an AMF or an SMF) of a network to manage and control the UE.

Interfaces between network elements are shown in FIG. 1.

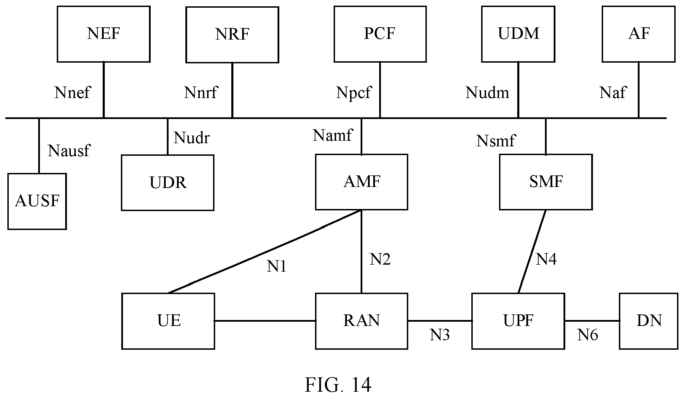

FIG. 14 is a schematic diagram of a service-based architecture. As shown in FIG. 14, Nausf, Nnef, Npcf, Nudm, Naf, Namf, and Nsmf are service-based interfaces respectively provided by the AUSF, NEF, PCF, UDM, AF, AMF, and SMF, and are used to invoke corresponding service-based operations. N1, N2, N3, N4, and N6 are interface sequence numbers.

In FIG. 1 and FIG. 14, names and functions of the interfaces between the network elements are as follows.
(1) N1 represents an interface between the AMF and the terminal, and may be configured to transfer a QoS control rule to the terminal device, and the like.
(2) N2 represents an interface between the AMF and the RAN, and may be configured to transfer radio bearer control information and the like from a core network side to the RAN.
(3) N3 represents an interface between the RAN and the UPF, and is mainly configured to transmit uplink and downlink user plane data between the RAN and the UPF.
(4) N4 represents an interface between the SMF and the UPF, and may be configured to transfer information between a control plane and a user plane, including delivery of forwarding rules, QoS control rules, traffic statistics rules, and the like from the control plane to the user plane, and reporting of user plane information.
(5) N5 represents an interface between the AF and the PCF, and may be configured to deliver an application service request and report a network event.
(6) N6 represents an interface between the UPF and the DN, and is configured to transmit uplink and downlink user data flows between the UPF and the DN.
(7) N7 represents an interface between the PCF and the SMF, and may be configured to deliver a protocol data unit (protocol data unit, PDU) session granularity control policy and a service data flow granularity control policy.
(8) N8 represents an interface between the AMF and the UDM, and may be used by the AMF to obtain, from the UDM, subscription data and authentication data related to access and mobility management, and used by the AMF to register current mobility management related information of the terminal with the UDM.
(9) N9 represents a user plane interface between the UPFs, and is configured to transmit uplink and downlink user data flows between the UPFs.
(10) N10 represents an interface between the SMF and the UDM, and may be used by the SMF to obtain, from the UDM, subscription data related to session management, and used by the SMF to register current session related information of the terminal with the UDM.
(11) N11 represents an interface between the SMF and the AMF, and may be configured to transfer PDU session tunnel information between the RAN and the UPF, transfer a control message to be sent to the terminal, transfer radio resource control information to be sent to the RAN, and the like.
(12) N12 represents an interface between the AMF and the AUSF, and may be used by the AMF to initiate an authentication process to the AUSF, where an SUCI may be carried as a subscription identifier.
(13) N13 represents an interface between the UDM and the AUSF, and may be used by the AUSF to obtain a user authentication vector from the UDM, to perform an authentication process.
(14) N15 represents an interface between the PCF and the AMF, and may be configured to deliver a terminal policy and an access control related policy.
(15) N35 represents an interface between the UDM and the UDR, and may be used by the UDM to obtain user subscription data information from the UDR.
(16) N36 represents an interface between the PCF and the UDR, and may be used by the PCF to obtain policy related subscription data and application data related information from the UDR.

The network elements or the functions may be network elements in a hardware device, may be software functions running on dedicated hardware, or may be virtualized functions instantiated on a platform (for example, a cloud platform). Optionally, the network elements or the functions may be implemented by one device, or may be jointly implemented by a plurality of devices, or may be one functional module in one device. This is not specifically limited in embodiments of this application.

The access network device in embodiments of this application may be a radio access network device.

In addition, the "network element" may also be referred to as an entity, a device, an apparatus, a module, or the like. This is not particularly limited in this application. Moreover, for ease of understanding and description, descriptions of the "network element" are omitted in some of the following descriptions. For example, the NEF network element is referred to as an NEF for short. In this case, the "NEF" should be understood as an NEF network element or an NEF entity. Descriptions of same or similar cases are omitted below.

It should be understood that FIG. 1 is merely an example of a network architecture, and the network architecture applicable to embodiments of this application is not limited thereto. Any network architecture that can implement functions of the foregoing network elements is applicable to embodiments of this application.

For example, in some network architectures, network function entities such as the AMF, the SMF, the PCF, and the UDM are all referred to as network function (network function, NF) network elements. Alternatively, in some other network architectures, a set of network elements such as the AMF, the SMF, the PCF, and the UDM may be referred to as a control plane function (control Plane function, CPF) network element.

The following uses the network elements in the 5G system as an example to describe specific solution details. It may be understood that when the solution is applied to an LTE system or a future communication system, each network element in the solution may be replaced with another network element having a corresponding function. This is not limited in this application.

It is known that a sensing capability is derived from a millimeter-wave frequency band. By using the millimeter-wave frequency band, a surveillance radar can reach a distance resolution of 0.75 m and an angle resolution of 6 degrees, so that target track detection and lane-based counting can be implemented, and an imaging radar can reach a distance resolution of 0.15 m and an angle resolution of 2 degrees, so that refined identification and classification of dynamic targets and three-dimensional imaging can be implemented. A sensing capability of the radar is not described herein.

**Table 1**

| Sensing capability type | Specification parameter | Distance resolution | Angular resolution | Sensing usage |
|---|---|---|---|---|
| Speed measuring radar | 1T (transmit) 1R (receive), and 20 MHz bandwidth | 7.5 m | N/A | Speed test, and photographing triggering |
| Surveillance radar | 2T 8R, and 200 MHz bandwidth | 0.75 m | 6 degrees | Target tracking, and lane-based counting |
| Imaging radar | 12T 16R, and 1GHz bandwidth | 0.15 m | 2 degrees | Refined identification and classification of dynamic targets; and three-dimensional imaging |

With the evolution of communication technologies, in future wireless communication, when a base station performs wireless communication by using a millimeter-wave frequency band, the base station naturally has a sensing capability similar to that of a radar, that is, the base station has both a wireless communication capability and a sensing and identification capability.

When the base station has the sensing capability brought by the millimeter-wave frequency band, a wireless communication system may perform sensing and identification on a specific region, object, or event, to resolve sensing requirements in many scenarios.

The following describes some examples of application scenarios of sensing requirements in the communication field.

### (1) Automatic driving

### Scenario 1 (V2X and UAV):

The V2X indicates vehicle-to-everything (vehicle-to-everything), and the UAV indicates an unmanned aerial vehicle (unmanned aerial vehicle).

Because a sensing distance of a vehicle or an unmanned aerial vehicle is short or a non-line-of-sight (non-line-of-sight, NLOS) path cannot be sensed, a dynamic map may be generated based on sensing.

### Scenario 2 (V2X and UAV):

In a driving process of a vehicle or an unmanned aerial vehicle, if a blind-spot collision dangerous event such as sudden appearance of a person or an object occurs, the dangerous event may be identified based on sensing, and a UE is informed to perform an emergency operation.

### Scenario 3 (V2X and UAV):

For automatic driving assistance of a vehicle or an unmanned aerial vehicle, a customized high-precision dynamic map is generated based on sensing to assist a UE in automatic driving.

### (2) Security supervision

### Scenario 1 (V2X and UAV):

If violation driving occurs, for example, a vehicle occupies an emergency lane or an unmanned aerial vehicle leaves a route, vehicle violation can be identified based on sensing and a real-time alarm or post-event punishment can be executed.

### Scenario 2 (national railway perimeter and UAV):

If a foreign object intrudes into a railway track or an unmanned aerial vehicle intrudes into a no-fly zone (such as an airport), a violation object can be identified and tracked based on sensing, and real-time emergency handling can be performed.

### (3) Family health:

Scenario 1: If abnormal postures such as people falling down are detected, the abnormal postures can be identified based on sensing and alarms can be generated.

Scenario 2: If health detection such as human breathing and heartbeat detection are performed, abnormal indicators can be identified based on sensing, and alarms can be generated.

### (4) Meteorological monitoring: The meteorological monitoring is to sense and predict the environment, climate, and weather changes.

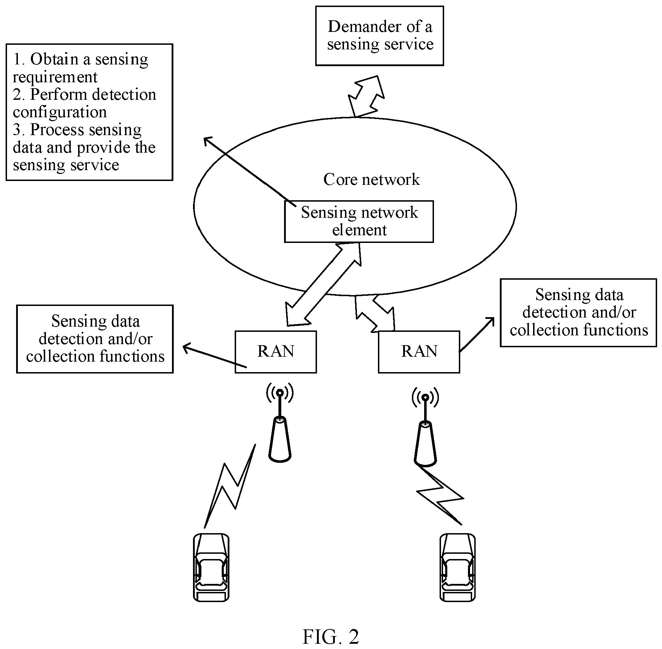

FIG. 2 is a schematic diagram of an architecture of a communication system according to this application. As shown in FIG. 2, a sensing network element of a wireless communication network is responsible for enabling an end-to-end sensing service. For example, the sensing network element obtains a sensing requirement based on an internal requirement of a network or a requirement of a demander of a sensing service. After obtaining the sensing requirement, the sensing network element controls the radio access network device to detect and/or collect sensing data. After obtaining the sensing data through detection, the radio access network device provides the sensing data to the sensing network element, and the sensing network element provides the sensing service based on the sensing data. For example, the sensing network element provides the sensing service to the demander, for example, an AF, an external application server (application server, AS), or a terminal device. Alternatively, the sensing network element performs optimization inside the network based on the sensing data, and the like.

For another example, the sensing network element obtains a sensing requirement based on an internal requirement of a network or a requirement of a demander of a sensing service. After obtaining the sensing requirement, the sensing network element controls a terminal device to detect and/or collect sensing data. After obtaining the sensing data through detection, the UE provides the sensing data to the sensing network element, and the sensing network element provides the sensing service based on the sensing data. For example, the sensing network element provides the sensing service to the demander, for example, an AF, an external application server, or a terminal device. Alternatively, a core network performs optimization inside the network based on the sensing data, and the like.

For example, in a 5G network, the sensing network element may be one of network elements of a 5G core (5G core, 5GC) network. Alternatively, the sensing network element may be a non-core network element.

Based on the communication architecture shown in FIG. 2, the technical solution of this application can provide an end-to-end communication sensing service. The following describes a method for providing a communication sensing service in this application.

FIG. 3 is a schematic flowchart of a method for providing a communication sensing service according to this application.

310: A first sensing network element sends a sensing control request message to a second sensing network element.

The sensing control request message is used to request the second sensing network element to perform a sensing operation.

320: The second sensing network element performs the sensing operation based on the sensing control request message, to obtain first sensing data.

Optionally, the request message carries a sensing requester identifier and/or a sensing application identifier of a first sensing service.

The sensing requester identifier indicates a requester requesting a sensing service. The sensing application identifier indicates an application (application, APP) requesting a sensing service, and is used for an NEF, an AMF, or the first sensing network element to determine whether a sensing requester and/or a sensing application are/is allowed to request the first sensing service.

330: The second sensing network element sends the first sensing data to the first sensing network element. The first sensing network element receives the first sensing data from the second sensing network element.

340: The first sensing network element provides the first sensing service based on the first sensing data.

In step 340, in an implementation, the first sensing network element may provide the sensing service to a demander based on a request of the demander of the sensing service (referred to as a demander below). Optionally, the demander may be, for example, a core network element, or a non-core network element, for example, an external application server (application server, AS), or the demander may be a terminal device. The demander may be understood as the first network element in the following.

For example, the first sensing network element receives a request message from the first network element, where the request message is used to request the sensing service. After receiving the request message, the first sensing network element sends second sensing data to the first network element based on the first sensing data.

Optionally, the first network element may be a core network element, an external application server, or a terminal device.

For example, the core network element may be a network exposure function network element, an access and mobility management function network element, or an application function network element. For example, in new radio (new radio, NR), the network exposure function network element may be an NEF, the access and mobility management function network element may be an AMF, and the application function network element may be an application function (application function, AF).

In an implementation, the first sensing network element receives the request message from the first network element, and the first sensing network element sends a response message of the request message to the first network element, where the response message carries the second data.

In another implementation, the first sensing network element receives the request message from the first network element, and the first sensing network element sends a response message of the request message to the first network element, where the response message does not carry the second sensing data and only indicates that the first sensing network element accepts the request of the first network element. The first sensing network element subsequently sends the second sensing data to the first network element via another message.

In another implementation, the first sensing network element receives the request message from the first network element, where the request message is used to request the sensing service. When a feedback manner of the sensing data of the sensing service is event-triggered feedback, based on event triggering, the first sensing network element obtains the first sensing data of the sensing service from the second sensing network element, and sends the second data to the first network element. Alternatively, after the first sensing network element obtains the first sensing data of the sensing service from the second sensing network element, and determines, based on the first sensing data, that an event is triggered, the first sensing network element sends the second sensing data to the first network element.

In the foregoing different implementations, the second sensing data may be the first sensing data. Alternatively, the second sensing data may be processed data obtained based on the first sensing data. This is not limited.

In an implementation, the request message that is received by the first sensing network element and that is from the first network element carries sensing indication information, where the sensing indication information indicates to request the sensing service.

Optionally, the request message may carry a service type of the sensing service. Alternatively, the service type may be a service identifier or service indication information. This is not limited.

For example, the service type of the sensing service includes one or more of the following:
object distribution, map, driving, violation detection, object tracking, emergency event detection, object positioning, object dimension, object speed, weather forecast, human posture, or human health.

In an example, when the "violation detection" in the service type is vehicle violation detection, the violation detection includes one or more of the following detections:
overspeed detection, marked lane violation detection, emergency lane violation detection, lane change violation detection, vehicle model and license plate mismatch detection, and abnormal driving route detection.

In another example, the violation detection in the service type is specifically an aircraft violation detection type, and may include one or more of the following detections:
overspeed flight detection, flight route violation detection, airway change violation detection, aircraft model and identity mismatch detection, and aircraft load violation detection.

In an example, the driving in the service type may specifically include one or more of the following types:
vehicle self-driving, vehicle semi-automatic driving, vehicle remote driving, vehicle driving assistance, aircraft self-driving, aircraft semi-automatic driving, aircraft remote driving, and aircraft driving assistance.

In an example, the "emergency event detection" in the service type may include one or more of the following detection types:
objects entering a specific region, collision between objects, a risk of collision between objects, a disaster occurrence, and a disaster occurrence risk.

For example, the objects entering a specific region means that a foreign object intrudes into a railway track, or an unmanned aerial vehicle intrudes into a no-fly zone (for example, an airport).

The collision between objects means that, for example, a collision occurs in a driving process of a vehicle or an unmanned aerial vehicle. In this case, after the sensing detection, another vehicle or unmanned aerial vehicle needs to be notified.

The risk of collision between objects means that, for example, in a driving process of a vehicle or an unmanned aerial vehicle, a blind-spot collision dangerous event such as sudden appearance of a person or an object occurs, so that a collision may be caused. In this case, after the sensing detection, a related vehicle or unmanned aerial vehicle needs to be notified, to avoid collision.

The disaster occurrence means that, for example, a flood occurs due to a rainstorm. In this case, after the sensing detection, related personnel need to be notified to avoid a risk.

The disaster occurrence risk means that, for example, a flood may occur due to an upcoming rainstorm. In this case, after the sensing detection, related personnel need to be notified of an alarm and disaster prevention.

In an example, the "weather forecast" in the service type may include one or more of the following types:
temperature, atmospheric pressure, humidity, rainfall, snowfall, wind speed, wind direction, cloud thickness, suspended particulate matter concentration, and air quality.

In an example, the "human health" in the service type may include one or more of the following types:
breathing, heartbeat, blood pressure, weight, skin health, sleep quality, and abnormal organs.

Optionally, the request message may carry a service requirement of the first sensing service.

For example, the service requirement of the first sensing service includes one or more of the following:
a first sensing distance, a first sensing region, a first sensing speed range, a first sensing distance resolution, first sensing angle measurement precision, a first sensing speed resolution, a first sensing QoS requirement, a first sensing location point, a first sensing UE identifier, first sensing time information, first sensing object identification accuracy, a false alarm rate of first sensing object identification, first sensing data precision, a first sensing data update frequency, a first sensing dimension indication, and a first sensing feedback manner.

For clarity and brevity of description, a set including the foregoing information is referred to as a first information set below.

Sensing distance resolution refers to a minimum distance between which two targets are distinguished when the two targets are located at a same azimuth but have different distances from the sensing network element. In other words, the sensing distance resolution defines a capability of the sensing network element to distinguish between two short-distance targets.

Sensing angle measurement precision refers to a capability of the sensing network element to distinguish between adjacent targets in terms of angles, and is usually measured by a minimum distinguishable angle. Alternatively, the angle measurement precision may also be referred to as angle resolution.

Sensing speed resolution refers to a capability of the sensing network element to distinguish between targets in terms of a radial velocity. Alternatively, the sensing speed resolution may be a sensing speed precision range or a sensing speed error range.

A sensing location point may be absolute coordinates or relative coordinates of a geographical location. This is not limited.

A UE identifier may be an external identifier of the UE, for example, a generic public subscription identifier (generic public subscription identifier, GPSI).

For example, sensing object identification accuracy may be a probability that there is actually a target and it is determined that the target exists.

For example, if a probability that there is actually a target and it is determined that the target exists is P, a probability that there is the target but it is determined that the target does not exist is 1-P.

Optionally, the first sensing object identification accuracy may be identification accuracy obtained by performing sensing and identification on a target object by using at least one of the sensing distance resolution, the sensing angle measurement precision, and the sensing speed resolution.

For example, the false alarm rate of the first sensing object identification may be a probability that there is actually no target but it is determined that the target exists, or may be a probability that there is actually a target but it is determined that the target does not exist.

For example, if a probability that there is actually no target but it is determined that the target exists is Q, a probability that there is actually no target and it is determined that the target does not exist is 1-Q.

It should be noted that object identification accuracy and a false alarm rate of object identification are two different parameters.

Optionally, the false alarm rate of the sensing object identification may be a false alarm rate of identification obtained by performing sensing and identification on a target object by using at least one of the sensing distance resolution, the sensing angle measurement precision, and the sensing speed resolution.

In addition, the object identification accuracy or the false alarm rate of the object identification may also be replaced with identification of a scattering point of the target object, that is, an identification success rate or a false alarm rate of identification obtained by identifying the target object based on at least one of the sensing distance resolution, the sensing angle measurement precision, and the sensing speed resolution.

For example, the sensing data precision may be an image resolution.

For example, the sensing data update frequency may be an image frame rate.

In addition, it should be noted that the first sensing data update frequency and a feedback periodicity of the first sensing data are distinguished.

For example, a video image is used as an example. A data update frequency is a video frame rate, and a higher frame rate indicates better coherence. For example, 60 frames mean that a video of 1s needs to have 60 pictures. The feedback periodicity means that a segment of continuous video frames is fed back at intervals of a period of time (for example, 10s).

Optionally, sensing dimension indication indicates a dimension of sensing data.

For example, a first sensing dimension indicates that the first sensing data is two-dimensional planar data or three-dimensional stereoscopic data.

For example, the first sensing time information includes a time length, or includes a start moment, an end moment, and the like.

Further, the first sensing feedback manner may be one or more of the following:
single feedback, periodic feedback, and event-triggered feedback.

When the first sensing feedback manner is the periodic feedback, the service requirement of the first sensing service further includes a first feedback periodicity of the first sensing data.

Optionally, a first QoS requirement may include one or more of the following:
a first service priority, a first data rate, a first latency, and object identification accuracy.

Alternatively, the object identification accuracy in the first QoS requirement may be an object identification error rate. In other words, the first QoS requirement may include either the object identification accuracy or the object identification error rate.

Optionally, the first QoS requirement may further include one or more of the following:
a QoS parameter identifier, and a priority corresponding to the QoS parameter identifier.

For example, the first QoS requirement may include a QoS parameter indicated by the QoS parameter identifier. Optionally, there may be one or more QoS parameters.

For example, the service requirement of the first sensing service includes one or more of the following information:
the first sensing QoS requirement, the first sensing location point, the first sensing UE identifier, the first sensing time information, the first sensing dimension indication, and the first sensing feedback manner.

The first sensing QoS requirement includes one or more of the following:
the first sensing distance, the first sensing region, the first sensing speed range, the first sensing distance resolution, the first sensing angle measurement precision, the first sensing speed resolution, the first sensing object identification accuracy, the false alarm rate of the first sensing object identification, the first sensing data precision, and the first sensing data update frequency.

In step 310, the first sensing network element sends the sensing control request message to the second sensing network element. Optionally, in an implementation, the sensing control request message includes sensing control information, and the sensing control information is used to control the second sensing network element to perform the sensing operation indicated by the sensing control information.

For example, the sensing control information includes one or more of the following information:
a second sensing distance, a second sensing region, a second sensing speed range, a second sensing distance resolution, second sensing angle measurement precision, a second sensing speed resolution, a second sensing QoS requirement, a second sensing location point, a second sensing UE identifier, second sensing time information, second sensing object identification accuracy, a false alarm rate of second sensing object identification, second sensing data precision, a second sensing data update frequency, a second sensing dimension indication, a sensing detection periodicity, and a second sensing feedback manner.

For clarity and brevity of description, a set including the foregoing information is referred to as a second information set below.

Herein, the sensing detection periodicity indicates a periodicity in which the second sensing network element performs sensing detection (or the sensing operation), or a periodicity in which the second sensing network element performs sensing.

Optionally, the sensing detection periodicity may be obtained based on the second sensing data update frequency.

Optionally, the second sensing feedback manner includes one or more of the following:
single feedback, periodic feedback, and event-triggered feedback.

Further, when the second sensing feedback manner is the periodic feedback, the sensing control information further includes a second feedback periodicity.

Further, the second sensing QoS requirement includes one or more of the following:
a second service priority, a second data rate, and a second delay.

A data rate is a rate of the sensing service.

In this application, the first delay or the second delay is a delay from a moment at which the demander of the sensing service requests for the sensing service to a moment at which the demander obtains the sensing service.

Alternatively, the first delay or the second delay is a delay from performing sensing detection by the second sensing network element to obtaining the second sensing data from the first sensing network element by the demander.

Alternatively, the first delay or the second delay is a delay from obtaining the first sensing data by the second sensing network element to obtaining the second sensing data from the first sensing network element by the demander.

Optionally, the sensing control information includes one or more of the following information:
the second sensing QoS requirement, the second sensing location point, the second sensing UE identifier, the second sensing time information, the second sensing dimension indication, the sensing detection periodicity, and the second sensing feedback manner.

The second sensing QoS requirement includes one or more of the following:
the second sensing distance, the second sensing region, the second sensing speed range, the second sensing distance resolution, the second sensing angle measurement precision, the second sensing speed resolution, the second sensing object identification accuracy, the false alarm rate of the second sensing object identification, the second sensing data precision, and the second sensing data update frequency.

Optionally, in this application, the first sensing network element obtains the sensing control information based on the service type and/or the service requirement.

As described above, before step 310, the first sensing network element may receive the request message from the first network element, where the request message carries the service type and/or the service requirement of the requested first sensing service. The service requirement may include one or more pieces of information in the foregoing first information set. In step 310, the first sensing network element sends the sensing control request message to the second sensing network element, where the sensing control request message may carry one or more pieces of information in the second information set.

It may be found that the first sensing network element may determine, based on the one or more pieces of information in the first information set, to obtain the one or more pieces of information in the second information set. In other words, the first sensing network element may determine, based on the one or more pieces of information in the first information set, to obtain the one or more pieces of information in the second information set, and further determines information carried in the control request message.

For example, the first sensing network element obtains the sensing control information by performing one or more of the following operations:
obtaining the second sensing distance based on the first sensing distance;
obtaining the second sensing region based on the first sensing region;
obtaining the second sensing location point based on the first sensing location point;
obtaining the second sensing UE identifier based on the first sensing UE identifier;
obtaining the second sensing time information based on the first sensing time information;
obtaining the second sensing feedback manner based on the first sensing feedback manner; and
obtaining the second feedback periodicity based on the first feedback periodicity.

It should be understood that one or more of the first sensing distance, the first sensing region, the first sensing location point, the first sensing UE identifier, the first sensing time information, the first sensing feedback manner, and the first feedback periodicity may be included in the request message from the first network element.

For example, the first sensing distance is 200 m, and the first sensing network element may set the second sensing distance to be greater than 200 m, for example, 210 m, for a processing redundancy of subsequent sensing data processing.

Optionally, the first sensing distance and the second sensing distance may be the same.

For example, the first sensing region is a region range of 10 km × 10 km, and a coverage range of a single second sensing network element is 3 km × 3 km, but not each coverage range of 3 km × 3 km belongs to the first sensing region. For example, a specific second sensing network element can sense only a 1 km × 1 km region range. The first sensing network element needs to determine, based on sensing regions of the first sensing region and each second sensing network element, the second sensing region for each second sensing network element.

Optionally, the first sensing region and the second sensing region may be the same.

For example, there are a plurality of (for example, 10) first sensing location points, and the first sensing network element determines that a plurality of (for example, 3) different second sensing network elements are needed to perform sensing respectively. For example, a second sensing network element A senses four location points, a second sensing network element B senses three location points, and a second sensing network element C senses three location points.

Optionally, the first sensing location point and the second sensing location point may be the same.

For example, the first sensing UE identifier is an external identifier (for example, a GPSI), and the first sensing network element converts the first sensing UE identifier into an internal identifier, for example, a subscription permanent identifier (subscription permanent identifier, SUPI), a globally unique temporary identifier (globally unique temporary identifier, GUTI), a system architecture evolution-temporary mobile subscriber identifier (system architecture evolution-temporary mobile subscriber identifier, S-TMSI), a next generation application protocol identifier (next generation application protocol identifier, NGAP ID), a cell radio network temporary identifier (cell radio network temporary identifier, C-RNTI), or another internal UE ID that can be identified by the first sensing network element.

For example, first sensing duration indicated by the first sensing time information is 100s, and the first sensing network element may set second sensing duration indicated by the second sensing time information to be greater than 100s, for example, 110s, for a processing redundancy of subsequent sensing data processing.

Optionally, the first sensing duration and the second sensing duration may be the same.

For example, for a feedback manner, in a case of a plurality of sensing service requests, some are singly sensed, some are periodically sensed, and the first sensing network element may perform aggregation. For example, if a first sensing feedback manner 1 is single sensing, and a first sensing feedback manner 2 is periodic sensing, the second sensing feedback manner is set to periodic sensing. After being processed by the first sensing network element, the first sensing data may be provided to a plurality of sensing requesters respectively.

Optionally, the first sensing feedback manner and the second sensing feedback manner may be the same.

Similarly, for the feedback periodicity, in a case of a plurality of sensing service requests, feedback periodicities requested by different sensing requesters are different, and the first sensing network element may perform aggregation. For example, if a first sensing feedback periodicity 1 is 5s, and a first sensing feedback periodicity 2 is 10s, a second sensing feedback periodicity may be 5s. After being processed by the first sensing network element, the first sensing data may be provided to a plurality of sensing requesters respectively.

Alternatively, the first sensing network element further performs one or more of the following operations:
obtaining the second sensing QoS requirement based on the first sensing QoS requirement; or
obtaining the second sensing QoS requirement based on the service type of the first sensing service.

For example, the demander of the sensing service may determine, in advance with the first sensing network element, a QoS requirement corresponding to the service type of the first sensing service. Therefore, the first sensing network element may obtain, based on the service type carried in the request message from the first network element, the QoS requirement corresponding to the service type of the first sensing service. In addition, end-to-end sensing detection completed in a communication network is complex, including processing of a plurality of types of data and data transmission, and the QoS requirement of the first sensing service may need to be modified or further split. Therefore, the first sensing network element may determine, with reference to a QoS requirement that can be provided by the second sensing network element or the service type of the first sensing service, a QoS requirement (that is, the second QoS requirement) for the second sensing network element to perform the sensing operation, include the second sensing QoS requirement in the sensing control request message, and send the sensing control request message to the second sensing network element.

For example, a delay of the first QoS requirement is 100 ms, and the first sensing network element needs to consider an end-to-end delay, including a data transmission delay, a sensing data processing delay, a delay redundancy, and the like of each interface. A delay of the second QoS requirement may be set to be less than 100 ms, for example, 80 ms. For another example, a sensing delay 100 ms of the first QoS requirement is a delay from a moment at which a requester with a sensing requirement requests for a sensing service to a moment at which the requester obtains the sensing service. In this case, the first sensing network element may perform splitting, and a sensing delay of the second QoS requirement is a delay from sending a sensing control command to obtaining the first sensing data by the first sensing network element. Therefore, the sensing delay of the second QoS requirement may be set to 50 ms.

Optionally, sensing time of the first QoS requirement may be the same as sensing delay of the second QoS requirement.

In addition, optionally, the first sensing network element may further determine, based on one or more of the following, a periodicity (that is, the sensing detection periodicity) in which the second sensing network element performs the sensing operation:
the service type of the first sensing service, the second sensing QoS requirement, the first sensing object identification accuracy, the false alarm rate of the first sensing object identification, the first sensing data precision, and the first sensing data update frequency.

Optionally, the first sensing network element may further perform one or more of the following operations to obtain some requirements for the second sensing network element to perform the sensing operation:
obtaining the second sensing distance resolution based on the first sensing distance resolution;
obtaining the second sensing angle measurement precision based on the first sensing angle measurement precision;
obtaining the second sensing speed resolution based on the first sensing speed resolution;
obtaining the second sensing object identification accuracy based on the first sensing object identification accuracy; and
obtaining the false alarm rate of the second sensing object identification based on the false alarm rate of the first sensing object identification.

For example, the first sensing distance resolution indicated by the first sensing distance resolution is yy, and the first sensing network element may set the second sensing distance resolution indicated by the second sensing distance resolution to be higher than or lower than yy, for example, zz, for a processing redundancy of subsequent sensing data processing.

Optionally, the first sensing distance resolution and the second sensing distance resolution may be the same.

The foregoing other parameters (for example, the sensing angle measurement precision, the sensing speed resolution, the sensing object identification accuracy, or the false alarm rate of the sensing object identification) are similar to this case, and are not described one by one.

For example, a distance resolution: yy = 0.5 m, and zz = 0.4 m; angle measurement precision: yy = 0.5 degrees, and zz = 0.4 degrees; a speed resolution: yy = 0.5 m/s, and zz = 0.4 m/s; identification accuracy: yy = 90%, and zz = 91%; and a false alarm rate: yy = 5%, and zz = 4%.

Optionally, the first sensing network element may further perform one or more of the following operations to obtain some requirements for the second sensing network element to perform the sensing operation:
obtaining one or more of the following based on one or more of the first sensing QoS requirement, the first sensing distance, the first sensing region, a first sensing speed range, the first sensing object identification accuracy, the false alarm rate of the first sensing object identification, the first sensing data precision, and the first sensing data update frequency:
the second sensing distance resolution, the second sensing angle measurement precision, the second sensing speed resolution, the second sensing object identification accuracy, and the false alarm rate of the second sensing object identification.

Optionally, the first sensing network element may perform some or all of the foregoing operations, or a combination of some operations in different embodiments. This is not limited.

Optionally, in an implementation, the sensing control information may include:
a region sensing indication; or
a region sensing indication and a second region.

For example, the sensing control information may include the region sensing indication, and the sensing region indication may implicitly indicate a RAN to sense a coverage region of the RAN, without a need to specially indicate a sensing region.

For example, the sensing control information may include the region sensing indication and the second region, where the region sensing indication indicates a RAN to perform a sensing operation on the second region.

Optionally, in an implementation, the sensing control information may include:
a UE sensing indication and the second sensing UE identifier;
a UE sensing indication and UE location information; or
a UE sensing indication, the second sensing UE identifier, and UE location information.

Herein, the UE sensing indication indicates that the sensing operation is specific to UE, and the sensing control information may carry an identifier of the UE (that is, the second sensing UE identifier) that needs to be sensed.

For example, the sensing control information may include the UE sensing indication and the UE location information, to indicate the second sensing network element to sense a current location of the UE.

For example, the sensing control information may include the UE sensing indication, an identifier of a UE that needs to be sensed, and location information of the UE.

Optionally, in an implementation, the sensing control information may include:
a continuous tracking indication;
a continuous tracking indication and the second sensing UE identifier; or
a continuous tracking indication and the second sensing region.

For example, if the sensing control information includes the continuous tracking indication, the second sensing network element is implicitly indicated to continuously track all objects in a coverage region of the second sensing network element.

For example, if the sensing control information includes the continuous tracking indication and an identifier of a UE (that is, the second sensing UE identifier), the second sensing network element is indicated to continuously track the UE.

Optionally, the sensing control information may alternatively include the continuous tracking indication and a plurality of UE identifiers, to indicate the second sensing network element to continuously track a plurality of UEs.

For example, if the sensing control information includes the continuous tracking indication and the second sensing region, the second sensing network element is indicated to continuously track all targets in the second sensing region.

Optionally, in an implementation, the sensing control information includes a service type.

Optionally, in the foregoing embodiments, the first sensing data may be one of the following data obtained by the second sensing network element based on an echo signal:
a time-domain digital signal, distance-speed spectrum information, location information and a speed value of a scattering point, and location information and a speed value of a target object.

For example, the first sensing data may be obtained in one of the following manners:

The second sensing network element obtains the first sensing data based on the echo signal.

Alternatively, the second sensing network element first obtains the time-domain digital signal based on the echo signal, and obtains the first sensing data based on the time-domain digital signal.

Alternatively, the second sensing network element first obtains the distance-speed spectrum information based on the echo signal, and obtains the first sensing data based on the distance-speed spectrum information.

Alternatively, the second sensing network element first obtains the location information and the speed value of the scattering point based on the echo signal, and obtains the first sensing data based on the location information and the speed value of the scattering point.

Alternatively, the second sensing network element first obtains the location information and the speed value of the target object based on the echo signal, and obtains the first sensing data based on the location information and the speed value of the target object.

In an implementation, the second sensing network element may be a radio access network device, for example, a RAN.

In another implementation, the second sensing network element may be a UE.

For example, under control of the first sensing network element, the UE may sense information around the UE. For example, a distance of 50 meters around the UE is sensed for automatic driving assistance; a human body shape, a contour, and an action around the UE are sensed; and a human body, breathing, a heartbeat, and the like are sensed.

The following provides some examples of providing a communication sensing service in this application.

FIG. 4 shows an example of providing a communication sensing service according to this application.

In a process shown in FIG. 4, a first sensing network element controls, based on a request of a demander of a sensing service, a second sensing network element to perform a sensing operation. The second sensing network element performs the sensing operation, to obtain sensing data, and provides the sensing data to the first sensing network element. The first sensing network element provides the sensing data to the demander.

401: The first sensing network element receives a request message from a first network element, where the request message is used to request a first sensing service.

For descriptions of the request message from the first network element, refer to the foregoing descriptions. Details are not described again.

Optionally, the request message may carry a sensing requester identifier and/or a sensing application identifier of the first sensing service.

The first sensing network element determines, based on the sensing requester identifier and/or the sensing application identifier, whether a sensing requester or a sensing application is allowed to request the first sensing service. If the sensing requester or the sensing application is allowed to request the first sensing service, the subsequent process continues. If the sensing requester or the sensing application is not allowed to request the first sensing service, the first sensing network element may return a rejection message to the first network element, or perform no processing.

402: The first sensing network element determines a sensing control request message.

In step 402, the first sensing network element may determine the sensing control request message based on one or more pieces of information carried in the request message, that is, determine information carried in the sensing control request message.

For example, the sensing control request message may carry the one or more pieces of information in the foregoing second information set. For details, refer to the foregoing descriptions. Details are not described again.

403: The first sensing network element sends the sensing control request message to the second sensing network element, and the second sensing network element receives the sensing control request message.

For descriptions of the sensing control request message, refer to the foregoing descriptions. Details are not described again.

Optionally, the sensing control request message carries sensing indication information, and the sensing indication information indicates the second sensing network element to perform the sensing operation.

Herein, step 402 may be an optional step. After receiving the request message from the first network element, the first sensing network element directly sends the sensing control request message to the second sensing network element, where the sensing control request message carries one or more pieces of information in a first information set. In other words, the first sensing network element may control the second sensing network element to perform the sensing operation based on a service type and/or a service requirement in the request message.

The following describes the solution by using an example in which the process in FIG. 4 includes step 402.

404: The second sensing network element performs the sensing operation based on the sensing control request message, to obtain first sensing data.

In an example, if a second sensing feedback manner of the first sensing data is single feedback or periodic feedback, steps 405 and 406 are further included after step 404.

405: The second sensing network element sends the first sensing data to the first sensing network element. The first sensing data is fed back in the single feedback manner or the periodic feedback manner.

406: The first sensing network element receives the first sensing data from the second sensing network element, and sends a response message of the request message to the first network element.

The response message carries second sensing data.

In another example, the first sensing network element receives the request message from the first network element, and the first sensing network element sends the response message of the request message to the second sensing network element, where the response message does not carry the second data and only indicates that the first sensing network element accepts the request of the first network element. The first sensing network element subsequently sends the second sensing data to the first network element via another message.

In another example, the first sensing network element receives the request message from the first network element, where the request message is used to request a sensing service, and a feedback manner of sensing data of the sensing service is event-triggered feedback. In this case, based on event triggering, the first sensing network element obtains the first sensing data of the sensing service from the second sensing network element, and sends the second data to the first network element. Alternatively, the first sensing network element obtains the first sensing data of the sensing service from the second sensing network element, and after determining, based on the first sensing data, that an event is triggered, the first sensing network element sends the second data to the first network element.

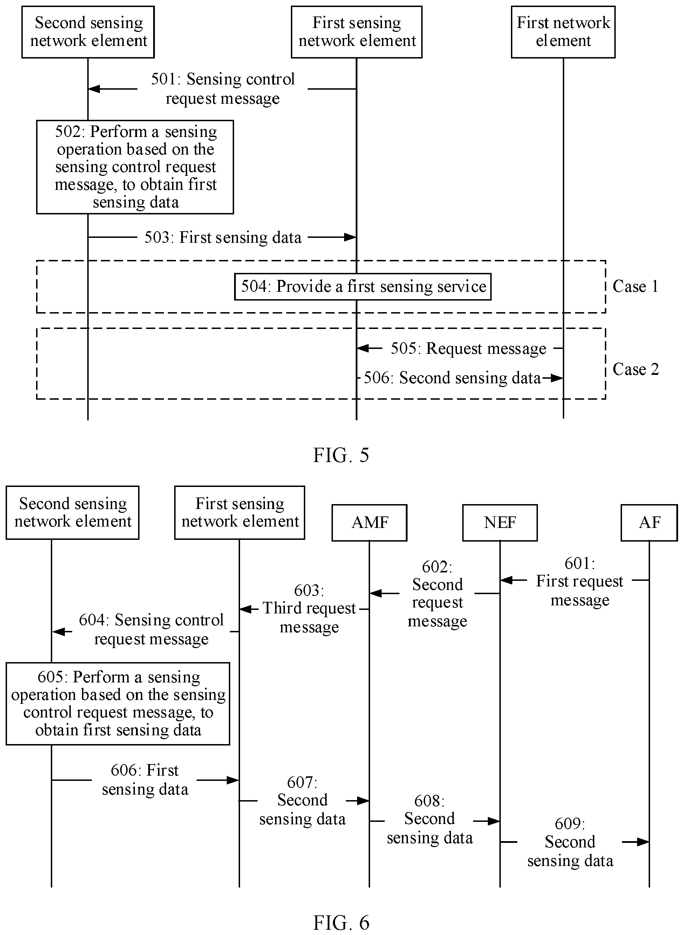

In another example, the first sensing network element may trigger, without the request from the demander (or an external), to send the sensing control request message to the second sensing network element, to control the second sensing network element to perform the sensing operation. When the demander requests the sensing service from the first sensing network element, the first sensing network element may generate corresponding sensing service data based on the obtained sensing data and return the data to the demander. For example, the sensing control request message may carry sensing control information, and the sensing control information indicates the sensing operation that needs to be performed by the second sensing network element, as shown in a process in FIG. 5.

FIG. 5 shows another example of providing a communication sensing service according to this application.

501: A first sensing network element sends a sensing control request message to a second sensing network element.

Correspondingly, the second sensing network element receives the sensing control request message from the first sensing network element.

502: The second sensing network element performs a sensing operation based on the sensing control request message, to obtain first sensing data.

503: The second sensing network element sends the first sensing data to the first sensing network element.

In a possible case (for example, Case 1), the first sensing network element receives the first sensing data from the second sensing network element, and provides a first sensing service based on the first sensing data, as shown in step 504.

504: The first sensing network element provides the first sensing service based on the first sensing data.

For example, the first sensing network element may perform internal network optimization or achieve another purpose based on the first sensing data.

In another possible case (for example, Case 2), the first sensing network element receives the first sensing data from the second sensing network element, and stores the first sensing data. When receiving a first request message that is from a demander and that is used to request a sensing service, the first sensing network element provides the first sensing service to the demander based on the first sensing data, as shown in steps 505 and 506.

For example, the demander of the sensing service is a core network element.

505: The first sensing network element receives the first request message from a first network element.

506: The first sensing network element sends second sensing data to the first network element based on a first request.

Optionally, the first network element may be a core network element, an AF, an external AS, or a UE. This is not limited.

The following uses the AF or the UE as an example to provide some examples in which the first sensing network element provides a sensing service.
(1) The AF requests the sensing service from the first sensing network element.

FIG. 6 shows an example process in which the AF requests the sensing service from the first sensing network element by using an NEF.

For example, in the process in FIG. 6, the AF requests a first sensing service from the first sensing network element by using the NEF. The NEF sends a request message of the first sensing service to an AMF based on the request of the AF. The AMF requests the first sensing service from the first sensing network element. The first sensing network element controls, based on the request of the AMF, a second sensing network element to perform a corresponding sensing operation. The second sensing network element performs the sensing operation, to obtain first sensing data of the first sensing service, and send the first sensing data to the first sensing network element. The first sensing network element provides second sensing data of the first sensing service to the AF. Optionally, the second sensing data may be the first sensing data, or the second sensing data is obtained based on the first sensing data.

601: The NEF receives a first request message from the AF.

The first request message is used to request the first sensing service, and the first request message carries a service type and/or a service requirement of the first sensing service.

The service requirement of the first sensing service may include the one or more pieces of information in the foregoing first information set. Details are not described again.

602: The NEF sends a second request message to the AMF, where the second request message is used to request the first sensing service.

The second request message carries the service type and/or the service requirement of the first sensing service.

The AMF receives the second request message from the NEF.

603: The AMF sends a third request message to the first sensing network element, where the third request message is used to request the first sensing service. The third request message carries the service type and/or the service requirement of the first sensing service.

604: The first sensing network element receives the third request message from the AMF, and sends a sensing control request message to the second sensing network element, where the sensing control request message is used to request the second sensing network element to perform the sensing operation.

The second sensing network element receives the sensing control request message from the first sensing network element.

605: The second sensing network element performs the sensing operation based on the sensing control request message, to obtain the first sensing data.

606: The second sensing network element sends the first sensing data to the first sensing network element.

The first sensing network element receives the first sensing data from the second sensing network element.

607: The first sensing network element sends the second sensing data of the first sensing service to the AMF.

Optionally, the second sensing data may be the first sensing data, or the second sensing data may be obtained based on the first sensing data.

608: The AMF sends the second sensing data to the NEF.

609: The NEF returns the second sensing data to the AF.

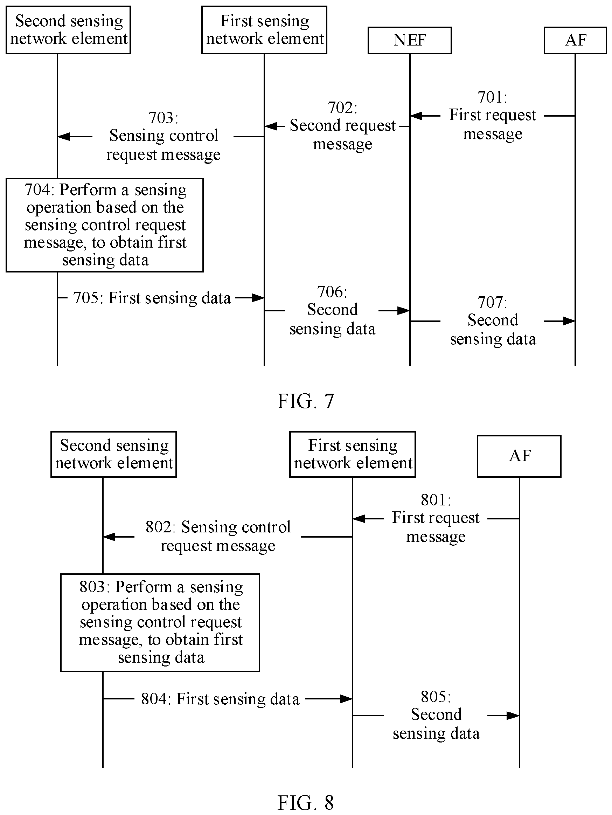

For example, in another implementation, the AF requests a first sensing service from an NEF in a core network. The NEF may directly request the first sensing service from the first sensing network element. The first sensing network element controls, based on the request of the NEF, a second sensing network element to perform a corresponding sensing operation, to obtain sensing data of the first sensing service, and finally provides the sensing data to the AF, as shown in FIG. 7.

FIG. 7 shows another example process in which the AF requests the sensing service from the first sensing network element by using the NEF.

701: The NEF receives a first request message from the AF.

The first request message is used to request a first sensing service, and the first request message carries a service type and/or a service requirement of the first sensing service.

The service requirement of the first sensing service may include the one or more pieces of information in the foregoing first information set. Details are not described again.

702: The NEF sends a second request message to the first sensing network element, where the second request message is used to request the first sensing service. The second request message carries the service type and/or the service requirement of the first sensing service.

For example, the service requirement of the first sensing service may include the one or more pieces of information in the first information set.

The first sensing network element receives the second request message from the NEF.

703: The first sensing network element sends a sensing control request message to the second sensing network element, where the sensing control request message is used to request the second sensing network element to perform the sensing operation.

The second sensing network element receives the sensing control request message from the first sensing network element.

704: The second sensing network element performs the sensing operation based on the sensing control request message, to obtain first sensing data of the first sensing service.

705: The second sensing network element sends the first sensing data to the first sensing network element.

The first sensing network element receives the first sensing data from the second sensing network element.

706: The first sensing network element sends second sensing data of the first sensing service to the NEF.

Optionally, the second sensing data may be the first sensing data, or the second sensing data may be obtained based on the first sensing data.

707: The NEF returns the second sensing data to the AF.

For example, in another implementation, the AF may directly request a first sensing service from the first sensing network element. The first sensing network element controls, based on the request of the AF, a second sensing network element to perform a corresponding sensing operation, to obtain first sensing data of the first sensing service. The second sensing network element sends the first sensing data to the first sensing network element. The first sensing network element provides the second sensing data of the first sensing service to the AF. The second sensing data may be the first sensing data, or obtained based on the first sensing data.

FIG. 8 shows an example process in which the AF requests the sensing service from the first sensing network element.

801: The first sensing network element receives a first request message from the AF.

The first request message is used to request the first sensing service, and the first request message carries a service type and/or a service requirement of the first sensing service.

802: The first sensing network element sends a sensing control request message to the second sensing network element, where the sensing control request message is used to request the second sensing network element to perform the sensing operation.

The second sensing network element receives the sensing control request message from the first sensing network element.

803: The second sensing network element performs the sensing operation based on the sensing control request message, to obtain the first sensing data of the first sensing service.

804: The second sensing network element sends the first sensing data to the first sensing network element.

The first sensing network element receives the first sensing data from the second sensing network element.

805: The first sensing network element sends the second sensing data of the first sensing service to the AF.

Optionally, the second sensing data may be the first sensing data, or the second sensing data may be obtained based on the first sensing data.

(2) The UE requests the sensing service from the first sensing network element.

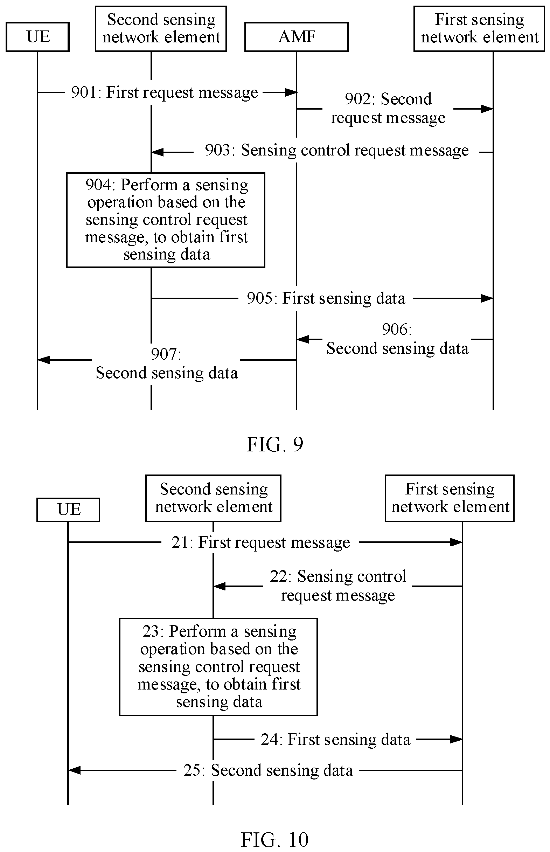

FIG. 9 shows an example process in which the UE requests the sensing service from the first sensing network element by using an AMF.

For example, in the process in FIG. 9, the UE requests a first sensing service from an AMF in a core network. The AMF requests the first sensing service from the first sensing network element. The first sensing network element controls, based on the request of the AMF, a second sensing network element to perform a corresponding sensing operation. The second sensing network element performs the sensing operation, to obtain first sensing data of the first sensing service, and send the first sensing data to the first sensing network element. The first sensing network element sends second sensing data of the first sensing service to the UE by using the AMF.

901: The UE sends a first request message to the AMF, where the first request message is used to request the first sensing service.

The first request message carries a service type and/or a service requirement of the first sensing service.

For example, the service requirement of the first sensing service may include the one or more pieces of information in the foregoing first information set.

The AMF receives the first request message from the UE.

902: The AMF sends a second request message to the first sensing network element, where the second request message is used to request the first sensing service. The second request message carries the service type and/or the service requirement of the first sensing service.

The first sensing network element receives the second request message from the AMF.

903: The first sensing network element sends a sensing control request message to the second sensing network element, where the sensing control request message is used to request the second sensing network element to perform the sensing operation.

The second sensing network element receives the sensing control request message from the first sensing network element.

904: The second sensing network element performs the sensing operation based on the sensing control request message, to obtain the first sensing data of the first sensing service.

905: The second sensing network element sends the first sensing data to the first sensing network element.

The first sensing network element receives the first sensing data from the second sensing network element.

906: The first sensing network element sends the second sensing data of the first sensing service to the AMF.

Optionally, the second sensing data may be the first sensing data, or the second sensing data may be obtained based on the first sensing data.

907: The AMF sends the second sensing data to the UE.

Alternatively, the AMF in FIG. 9 may be an SMF.

For example, in another implementation, the UE may directly request a first sensing service from the first sensing network element. The first sensing network element controls, based on the request of the UE, a second sensing network element to perform a corresponding sensing operation, to obtain first sensing data of the first sensing service. The second sensing network element provides the first sensing data of the first sensing service to the first sensing network element, and the first sensing network element provides the second sensing data of the first sensing service to the UE. Optionally, the second sensing data may be the first sensing data, or obtained based on the first sensing data, as shown in FIG. 10.

FIG. 10 shows an example process in which the UE requests the sensing service from the first sensing network element.

21: The UE sends a first request message to the first sensing network element, where the first request message is used to request the first sensing service.

The first request message carries a service type and/or a service requirement of the first sensing service.

The first sensing network element receives the first request message from the UE.

22: The first sensing network element sends a sensing control request message to the second sensing network element, where the sensing control request message is used to request the second sensing network element to perform the sensing operation.

The second sensing network element receives the sensing control request message from the first sensing network element.

23: The second sensing network element performs the sensing operation based on the sensing control request message, to obtain the first sensing data of the first sensing service.

24: The second sensing network element sends the first sensing data to the first sensing network element.

The first sensing network element receives the first sensing data from the second sensing network element.

25: The first sensing network element sends the second sensing data of the first sensing service to the UE.

Optionally, the second sensing data may be the first sensing data, or the second sensing data may be obtained based on the first sensing data.

In the foregoing embodiments, there may be a plurality of specific implementations in which the first sensing network element sends the sensing control request message to the second sensing network element.

Optionally, the first sensing network element may send the sensing control request message to the second sensing network element through a direct interface.

Alternatively, the first sensing network element may send the sensing control request message to the second sensing network element by using the AMF.

Alternatively, the first sensing network element may send the sensing control request message to the second sensing network element by using the SMF. Further, the SMF sends the sensing control request message from the first sensing network element to the second sensing network element by using the AMF.

In addition, in the foregoing embodiments, there may also be a plurality of specific implementations in which the second sensing network element sends the first sensing data to the first sensing network element.

Optionally, the second sensing network element may send the first sensing data to the first sensing network element through a direct interface.

Alternatively, the second sensing network element may send the first sensing data to the first sensing network element by using the AMF.

Alternatively, the second sensing network element may send the first sensing data to the first sensing network element by using the SMF. Further, the second sensing network element first sends the first sensing data to the AMF, the AMF then sends the first sensing data to the SMF, and the SMF finally sends the first sensing data to the first sensing network element.

Alternatively, the second sensing network element sends the first sensing data to the first sensing network element by using the UPF.

In the foregoing embodiments, that the first sensing network element obtains the sensing data of the first sensing service from one second sensing network element is merely used as an example. Optionally, in some embodiments, the first sensing network element may alternatively send the sensing control request message to a plurality of second sensing network elements. Alternatively, the first sensing network element may send the sensing control request message to a plurality of second sensing network elements based on the request message from the first network element.

Correspondingly, the first sensing network element may receive the first sensing data from the plurality of second sensing network elements, and finally provide the second sensing data of the first sensing service to the first network element based on the first sensing data of the plurality of second sensing network elements.

Optionally, the second sensing data provided by the first sensing network element to the first network element may be first sensing data from a second sensing network element in the plurality of second sensing network elements, or may be obtained through processing based on the first sensing data of a second sensing network element. Alternatively, the second sensing data provided by the first sensing network element to the first network element may be obtained based on the first sensing data from some or all second sensing network elements. This is not limited.

The foregoing describes in detail the method for providing a communication sensing service provided in this application. The following describes a communication apparatus provided in this application.

FIG. 11 is a schematic block diagram of a communication apparatus according to this application. As shown in FIG. 11, a communication apparatus 1000 includes a processing unit 1100, a receiving unit 1200, and a sending unit 1300.

Optionally, the communication apparatus 1000 may correspond to the first sensing network element in embodiments of this application.

In this case, the units of the communication apparatus 1000 are configured to implement the following functions:

The sending unit 1300 is configured to send a sensing control request message to a second sensing network element, where the sensing control request message is used to request the second sensing network element to perform a sensing operation.

The receiving unit 1200 is configured to receive first sensing data from the second sensing network element.

The processing unit 1100 is configured to provide a first sensing service based on the first sensing data.

Optionally, in an embodiment, the receiving unit 1200 is further configured to receive a request message from a first network element, where the request message is used to request a sensing service, and the first network element is a core network element, an external application server, or a terminal device.

The processing unit 1100 is configured to control, based on the first sensing data, the sending unit 1300 to send second sensing data of the first sensing service to the first network element.

Optionally, in an embodiment, the processing unit 1100 is further configured to perform one or more of the following operations to obtain sensing control information:
perform one or more of the following operations to obtain the sensing control information:
obtain a second sensing distance based on a first sensing distance;
obtain a second sensing region based on a first sensing region;
obtain a second sensing location point based on a first sensing location point;
obtain a second sensing UE identifier based on a first sensing UE identifier;
obtain second sensing time information based on first sensing time information;
obtain a second sensing QoS requirement based on a first sensing QoS requirement;
obtain a sensing detection periodicity based on at least one of the first sensing QoS requirement, a first sensing target identification success rate, a first sensing image resolution, and a first sensing image frame rate;
obtain a second sensing feedback manner based on a first sensing feedback manner; and
obtain a second feedback periodicity based on a first feedback periodicity.

Optionally, in an embodiment, the processing unit 1100 is further configured to perform one or more of the following operations:
obtain a second sensing distance resolution based on a first sensing distance resolution;
obtain a second sensing angle measurement precision based on a first sensing angle measurement precision;
obtaining a second sensing speed resolution based on a first sensing speed resolution;
obtain, based on a success rate of implementing the first sensing distance resolution, a success rate of implementing the second sensing distance resolution;
obtain, based on a success rate of implementing the first sensing angle measurement precision, a success rate of implementing the second sensing angle measurement precision; and
obtain, based on a success rate of implementing the first sensing speed resolution, a success rate of implementing the second sensing speed resolution.

Optionally, in an embodiment, the processing unit 1100 is further configured to obtain one or more of the following based on one or more of the first sensing QoS requirement, the first sensing distance, the first sensing region, the first sensing speed range, the first sensing target identification accuracy, the first sensing image resolution, and the first sensing image frame rate:
the second sensing distance resolution, the second sensing angle measurement precision, the second sensing speed resolution, the success rate of implementing the second sensing distance resolution, the success rate of implementing the second sensing angle measurement precision, and the success rate of implementing the second sensing speed resolution.

In the foregoing implementations, the receiving unit 1200 and the sending unit 1300 may also be integrated into one transceiver unit, and have both of a receiving function and a sending function. This is not limited herein.

In the embodiments in which the communication apparatus 1000 corresponds to the first sensing network element, the processing unit 1100 is configured to perform processing and/or an operation implemented internally by the first sensing network element in addition to sending and receiving operations. The receiving unit 1200 is configured to perform a receiving action, and the sending unit 1300 is configured to perform a sending action.

For example, in FIG. 3, the processing unit 1100 performs step 340, the sending unit 1300 performs an operation of sending the sensing control request message in step 310, and the receiving unit 1200 performs an operation of receiving the first sensing data in step 330.

For another example, in FIG. 4, the processing unit 1100 performs step 402, the receiving unit 1200 performs an operation of receiving the request message in step 401 and an operation of receiving the first sensing data in step 405, and the sending unit 1300 performs an operation of sending the sensing control request message in step 403 and an operation of sending the response message in step 406.

For another example, in FIG. 5, the processing unit 1100 performs step 504. The sending unit 1300 performs an operation of sending the sensing control request message in step 501 and an operation of sending the second sensing data in step 506. The receiving unit 1200 performs an operation of receiving the first sensing data in step 503 and an operation of receiving the request message in step 505.

For another example, in FIG. 6, the receiving unit 1200 performs an operation of receiving the third request message in step 603 and an operation of receiving the first sensing data in step 606. The sending unit 1300 performs an operation of sending the sensing control request message in step 604 and an operation of sending the second sensing data in step 607.

For another example, in FIG. 7, the receiving unit 1200 performs an operation of receiving the second request message in step 702 and an operation of receiving the first sensing data in step 705. The sending unit 1300 performs an operation of sending the sensing control request message in step 703 and an operation of sending the second sensing data in step 706.

For another example, in FIG. 8, the receiving unit 1200 performs an operation of receiving the first request message in step 801 and an operation of receiving the first sensing data in step 804. The sending unit 1300 performs an operation of sending the sensing control request message in step 802 and an operation of sending the second sensing data in step 805.

For another example, in FIG. 9, the receiving unit 1200 performs an operation of receiving the second request message in step 902 and an operation of receiving the first sensing data in step 905. The sending unit 1300 performs an operation of sending the sensing control request message in step 903 and an operation of sending the second sensing data in step 906.

For another example, in FIG. 10, the receiving unit 1200 performs an operation of receiving the first request message in step 21 and an operation of receiving the first sensing data in step 24. The sending unit 1300 performs an operation of sending the sensing control request message in step 22 and an operation of sending the second sensing data in step 25.

Optionally, the communication apparatus 1000 may correspond to the second sensing network element in embodiments of this application.

In this case, the units of the communication apparatus 1000 are configured to implement the following functions:
The receiving unit 1200 is configured to receive a sensing control request message from a first sensing network element, where the sensing control request message is used to request the second sensing network element to perform a sensing operation.

The processing unit 1100 is configured to perform the sensing operation based on the sensing control request message, to obtain first sensing data.

The sending unit 1300 is configured to send the first sensing data to the first sensing network element.

In an example of the foregoing apparatus embodiments, the second sensing data is the first sensing data.

In an example of the foregoing apparatus embodiments, the second sensing data is obtained based on the first sensing data.

In an example of the foregoing apparatus embodiments, the request message carries sensing indication information, and the sensing indication information indicates to request a sensing service.

In an example of the foregoing apparatus embodiments, the request message carries a service type of the first sensing service.

In an example of the foregoing apparatus embodiments, the service type includes one or more of the following:
object distribution, map, driving, violation detection, object tracking, emergency event detection, object positioning, object dimension, object speed, weather forecast, human posture, and human health.

In an example of the foregoing apparatus embodiments, the violation detection type is specifically a vehicle violation detection type, and the vehicle violation detection type includes one or more of the following detections:
overspeed detection, marked lane violation detection, emergency lane violation detection, lane change violation detection, vehicle model and license plate mismatch detection, and abnormal driving route detection.

In an example of the foregoing apparatus embodiments, the violation detection type is an aircraft violation detection type, and the aircraft violation detection type includes one or more of the following detections:
overspeed flight detection, flight route violation detection, airway change violation detection, aircraft model and identity mismatch detection, and aircraft load violation detection.

In an example of the foregoing apparatus embodiments, the driving type includes one or more of the following types:
vehicle self-driving, vehicle semi-automatic driving, vehicle remote driving, vehicle driving assistance, aircraft self-driving, aircraft semi-automatic driving, aircraft remote driving, and aircraft driving assistance.

In an example of the foregoing apparatus embodiments, the emergency event detection type includes one or more of the following types:
objects entering a specific region, collision between objects, a risk of collision between objects, a disaster occurrence, and a disaster occurrence risk.

In an example of the foregoing apparatus embodiments, the weather forecast type includes one or more of the following types:
temperature, atmospheric pressure, humidity, rainfall, snowfall, wind speed, wind direction, cloud thickness, suspended particulate matter concentration, and air quality.

In an example of the foregoing apparatus embodiments, the human health type includes one or more of the following types:
breathing, heartbeat, blood pressure, weight, skin health, sleep quality, and abnormal organs.

In an example of the foregoing apparatus embodiments, the request message carries a service requirement of the first sensing service.

In an example of the foregoing apparatus embodiments, the service requirement includes one or more of the following information:
a first sensing distance, a first sensing region, a first sensing speed range, a first sensing distance resolution, first sensing angle measurement precision, a first sensing speed resolution, a first sensing quality of service QoS requirement, a first sensing location point, a first sensing user equipment UE identifier, first sensing time information, first sensing object identification accuracy, a false alarm rate of first sensing object identification, first sensing data precision, a first sensing data update frequency, a first sensing dimension indication, and a first sensing feedback manner.

In an example of the foregoing apparatus embodiments, the first sensing feedback manner includes one or more of the following:
single feedback, periodic feedback, and event-triggered feedback.

In an example of the foregoing apparatus embodiments, the first sensing QoS requirement includes one or more of the following:
a first service priority, a first data rate, and a first delay.

In an example of the foregoing apparatus embodiments, the first sensing QoS requirement includes one or more of the following:
a QoS parameter identifier, and a priority corresponding to the QoS parameter identifier.

In an example of the foregoing apparatus embodiments, the first sensing QoS requirement further includes one or more of the following:
the first sensing distance, the first sensing region, the first sensing speed range, the first sensing distance resolution, the first sensing angle measurement precision, the first sensing speed resolution, the first sensing object identification accuracy, the false alarm rate of the first sensing object identification, the first sensing data precision, and the first sensing data update frequency.

In an example of the foregoing apparatus embodiments, when the first sensing feedback manner is the periodic feedback, the service requirement further includes a first feedback periodicity.

In an example of the foregoing apparatus embodiments, the request message carries a sensing requester identifier and/or a sensing application identifier of the first sensing service.

In an example of the foregoing apparatus embodiments, the sensing control request message includes sensing control information, and the sensing control information is used to control the second sensing network element to perform the sensing operation indicated by the sensing control information.

In an example of the foregoing apparatus embodiments, the sensing control information includes one or more of the following information:
a second sensing distance, a second sensing region, a second sensing speed range, a second sensing distance resolution, second sensing angle measurement precision, a second sensing speed resolution, a second sensing QoS requirement, a second sensing location point, a second sensing UE identifier, second sensing time information, second sensing object identification accuracy, a false alarm rate of second sensing object identification, second sensing data precision, a second sensing data update frequency, a second sensing dimension indication, a sensing detection periodicity, and a second sensing feedback manner.

In an example of the foregoing apparatus embodiments, the second sensing QoS requirement includes one or more of the following:
a second service priority, a second data rate, and a second delay.

In an example of the foregoing apparatus embodiments, the second sensing QoS requirement further includes one or more of the following:
the second sensing distance, the second sensing region, the second sensing speed range, the second sensing distance resolution, the second sensing angle measurement precision, the second sensing speed resolution, the second sensing object identification accuracy, the false alarm rate of the second sensing object identification, the second sensing data precision, and the second sensing data update frequency.

In an example of the foregoing apparatus embodiments, the second sensing feedback manner includes one or more of the following:
single feedback, periodic feedback, and event-triggered feedback.

In an example of the foregoing apparatus embodiments, when the second sensing feedback manner is the periodic feedback, the sensing control information further includes a second feedback periodicity.

In an example of the foregoing apparatus embodiments, the sensing control information includes:
a region sensing indication; or
a region sensing indication and a second region.

In an example of the foregoing apparatus embodiments, the sensing control information includes:
a UE sensing indication and the second sensing UE identifier;
a UE sensing indication and UE location information; or
a UE sensing indication, the second sensing UE identifier, and UE location information.

In an example of the foregoing apparatus embodiments, the sensing control information includes:
a continuous tracking indication;
a continuous tracking indication and the second sensing UE identifier;
a continuous tracking indication and location information of a target object; or
a continuous tracking indication and the second sensing region.

In an example of the foregoing apparatus embodiments, the first sensing data may be one of the following data obtained based on an echo signal:
a time-domain digital signal, distance-speed spectrum information, location information and a speed value of a scattering point, and location information and a speed value of a target object.

In an example of the foregoing apparatus embodiments, a manner of obtaining the first sensing data includes:
obtaining the first sensing data based on the echo signal;
obtaining the time-domain digital signal based on the echo signal, and obtaining the first sensing data based on the time-domain digital signal;
obtaining the distance-speed spectrum information based on the echo signal, and obtaining the first sensing data based on the distance-speed spectrum information;
obtaining the location information and the speed value of the scattering point based on the echo signal, and obtaining the first sensing data based on the location information and the speed value of the scattering point; or
obtaining the location information and the speed value of the target object based on the echo signal, and obtaining the first sensing data based on the location information and the speed value of the target object.

In an example of the foregoing apparatus embodiments, the first network element is one of the following network elements:
a network exposure function network element, an access and mobility management function network element, an application function network element, an application server AS, or the terminal device.

In an example of the foregoing apparatus embodiments, the second sensing network element is a radio access network device or a terminal device.

In the foregoing implementations, the receiving unit 1200 and the sending unit 1300 may also be integrated into one transceiver unit, and have both of a receiving function and a sending function. This is not limited herein.

In the embodiments in which the communication apparatus 1000 corresponds to the second sensing network element, the processing unit 1100 is configured to perform processing and/or an operation implemented internally by the second sensing network element in addition to sending and receiving operations. The receiving unit 1200 is configured to perform a receiving action, and the sending unit 1300 is configured to perform a sending action.

For example, in FIG. 3, the processing unit 1100 performs step 320, the receiving unit 1200 performs an operation of receiving the sensing control request message in step 310, and the sending unit 1300 performs an operation of sending the first sensing data in step 330.

For another example, in FIG. 4, the processing unit 1100 performs step 404. The receiving unit 1200 performs an operation of receiving the sensing control request message in step 403. The sending unit 1300 performs an operation of sending the first sensing data in step 405.

For another example, in FIG. 5, the processing unit 1100 performs step 502. The receiving unit 1200 performs an operation of receiving the sensing control request message in step 501. The sending unit 1300 performs an operation of sending the first sensing data in step 503.

For another example, in FIG. 6, the processing unit 1100 performs step 605. The receiving unit 1200 performs an operation of receiving the sensing control request message in step 604. The sending unit 1300 performs an operation of sending the first sensing data in step 606.

For another example, in FIG. 7, the processing unit 1100 performs step 704. The receiving unit 1200 performs an operation of receiving the sensing control request message in step 703. The sending unit 1300 performs an operation of sending the first sensing data in step 705.

For another example, in FIG. 8, the processing unit 1100 performs step 803. The receiving unit 1200 performs an operation of receiving the sensing control request message in step 802. The sending unit 1300 performs an operation of sending the first sensing data in step 804.

For another example, in FIG. 9, the processing unit 1100 performs step 904. The receiving unit 1200 performs an operation of receiving the sensing control request message in step 903. The sending unit 1300 performs an operation of sending the first sensing data in step 905.

For another example, in FIG. 10, the processing unit 1100 performs step 23. The receiving unit 1200 performs an operation of receiving the sensing control request message in step 22. The sending unit 1300 performs an operation of sending the first sensing data in step 24.

FIG. 12 is a schematic diagram of a structure of a communication apparatus according to this application. As shown in FIG. 12, the communication apparatus 10 includes one or more processors 11, one or more memories 12, and one or more communication interfaces 13. The processor 11 is configured to control the communication interface 13 to receive and send a signal. The memory 12 is configured to store a computer program. The processor 11 is configured to invoke the computer program from the memory 12 and run the computer program, so that the communication apparatus 10 performs processing performed by the first sensing network element or the second sensing network element in the method embodiments of this application.

For example, the processor 11 may have a function of the processing unit 1100 shown in FIG. 11, and the communication interface 13 may have a function of the receiving unit 1200 and/or the sending unit 1300 shown in FIG. 11. Specifically, the processor 11 may be configured to perform processing or an operation performed inside the communication apparatus, and the communication interface 13 is configured to perform sending and/or receiving operations performed by the communication apparatus.

In an implementation, the communication apparatus 10 may be the first sensing network element in the method embodiments. In this implementation, the communication interface 13 may be a transceiver. The transceiver may include a receiver and/or a transmitter. Optionally, the processor 11 may be a baseband apparatus, and the communication interface 13 may be a radio frequency apparatus.

In another implementation, the communication apparatus 10 may be a chip (or a chip system) installed in the first sensing network element. In this implementation, the communication interface 13 may be an interface circuit or an input/output interface.

In an implementation, the communication apparatus 10 may be the second sensing network element in the method embodiments. In this implementation, the communication interface 13 may be a transceiver. The transceiver may include a receiver and/or a transmitter. Optionally, the processor 11 may be a baseband apparatus, and the communication interface 13 may be a radio frequency apparatus.

In another implementation, the communication apparatus 10 may be a chip (or a chip system) installed in the second sensing network element. In this implementation, the communication interface 13 may be an interface circuit or an input/output interface.

In FIG. 12, a dashed box behind a component (for example, a processor, a memory, or a communication interface) indicates that there may be more than one component.

Optionally, the memory and the processor in the foregoing apparatus embodiments may be physically independent units, or the memory and the processor may be integrated together. This is not limited herein.

In addition, this application further provides a computer-readable storage medium. The computer-readable storage medium stores computer instructions. When the computer instructions are run on a computer, an operation and/or processing performed by the second sensing network element in the method embodiments of this application are/is performed.

This application further provides a computer-readable storage medium. The computer-readable storage medium stores computer instructions. When the computer instructions are run on a computer, an operation and/or processing performed by the first sensing network element in the method embodiments of this application are/is performed.

In addition, this application further provides a computer program product. The computer program product includes computer program code or instructions. When the computer program code or instructions are run on a computer, an operation and/or processing performed by the second sensing network element in the method embodiments of this application are/is performed.

This application further provides a computer program product. The computer program product includes computer program code or instructions. When the computer program code or instructions are run on a computer, an operation and/or processing performed by the first sensing network element in the method embodiments of this application are/is performed.

In addition, this application further provides a chip. The chip includes a processor. A memory configured to store a computer program is disposed independently of the chip. The processor is configured to execute the computer program stored in the memory, so that the second sensing network element on which the chip is mounted performs an operation and/or processing performed by the second sensing network element in any one of the method embodiments.

Further, the chip may further include a communication interface. The communication interface may be an input/output interface, or may be an interface circuit, or the like. Further, the chip may further include the memory.

This application further provides a chip. The chip includes a processor. A memory configured to store a computer program is disposed independently of the chip. The processor is configured to execute the computer program stored in the memory, so that the first sensing network element on which the chip is mounted performs an operation and/or processing performed by the first sensing network element in any one of the method embodiments.

Further, the chip may further include a communication interface. The communication interface may be an input/output interface, or may be an interface circuit, or the like. Further, the chip may further include the memory.

Optionally, there are one or more processors, there are one or more memories, and there are one or more memories.

In addition, this application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) the data and/or information processed by the processor, so that an operation and/or processing performed by the second sensing network element in any one of the method embodiments is performed.

This application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) the data and/or information processed by the processor, so that an operation and/or processing performed by the first sensing network element in any one of the method embodiments is performed.

In addition, this application further provides a communication apparatus, including at least one processor. The at least one processor is coupled to at least one memory, and the at least one processor is configured to execute a computer program or instructions stored in the at least one memory, so that the communication apparatus performs an operation and/or processing performed by the second sensing network element in any one of the method embodiments.

This application further provides a communication apparatus, including at least one processor. The at least one processor is coupled to at least one memory, and the at least one processor is configured to execute a computer program or instructions stored in the at least one memory, so that the communication apparatus performs an operation and/or processing performed by the first sensing network element in any one of the method embodiments.

In addition, this application further provides a communication device, including a processor and a memory. Optionally, the communication device may further include a transceiver. The memory is configured to store a computer program. The processor is configured to invoke the computer program stored in the memory and run the computer program, and control the transceiver to send or receive a signal, so that the communication device performs an operation and/or processing performed by the second sensing network element in any one of the method embodiments.

This application further provides a communication device, including a processor and a memory. Optionally, the communication device may further include a transceiver. The memory is configured to store a computer program. The processor is configured to invoke the computer program stored in the memory and run the computer program, and control the transceiver to send or receive a signal, so that the communication device performs an operation and/or processing performed by the first sensing network element in any one of the method embodiments.

This application further provides a communication system, including the first sensing network element and the second sensing network element in embodiments of this application.

Optionally, the communication system may further include one or more of the following devices or network elements: a terminal device, a network exposure function network element (for example, an NEF), and an access and mobility management network element (for example, an AMF).

The memory in embodiments of this application may be a volatile memory or a nonvolatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) used as an external cache. By way of example but not limitation, many forms of RAMs are usable, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the system and methods described in this specification aims to include but is not limited to these and any memory of another appropriate type.

The methods provided in the foregoing embodiments may be fully or partially implemented by software, hardware, firmware, or any combination thereof. When software is used to implement the embodiments, all or some of the embodiments may be implemented in a form of a computer program product. The computer program product may include one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

To clearly describe the technical solutions in embodiments of this application, numbers such as "first" and "second" are used in embodiments of this application to distinguish between same items or similar items that provide basically same functions or purposes. For example, the first sensing network element and the second sensing network element are merely used to distinguish between different sensing network elements. A person skilled in the art may understand that the numbers such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division or may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for providing a communication sensing service, comprising:
sending, by a first sensing network element, a sensing control request message to a second sensing network element, wherein the sensing control request message is used to request the second sensing network element to perform a sensing operation;
receiving, by the first sensing network element, first sensing data from the second sensing network element; and
providing, by the first sensing network element, a first sensing service based on the first sensing data.

2. The method according to claim 1, wherein the method further comprises:
receiving, by the first sensing network element, a request message from a first network element, wherein the request message is used to request the first sensing service, and the first network element is a core network element, an external application server, or a terminal device; and
the providing, by the first sensing network element, a first sensing service based on the first sensing data comprises:
sending, by the first sensing network element, second sensing data of the first sensing service to the first network element based on the first sensing data.

3. The method according to claim 2, wherein the second sensing data is the first sensing data.

4. The method according to claim 2, wherein the second sensing data is obtained based on the first sensing data.

5. The method according to any one of claims 2 to 4, wherein the request message carries sensing indication information, and the sensing indication information indicates to request a sensing service.

6. The method according to any one of claims 2 to 5, wherein the request message carries a service type of the first sensing service.

7. The method according to claim 6, wherein the service type comprises one or more of the following:
object distribution, map, driving, violation detection, object tracking, emergency event detection, object positioning, object dimension, object speed, weather forecast, human posture, and human health.

8. The method according to any one of claims 2 to 7, wherein the request message carries a service requirement of the first sensing service.

9. The method according to claim 8, wherein the service requirement comprises one or more of the following:
a first sensing distance, a first sensing region, a first sensing speed range, a first sensing distance resolution, first sensing angle measurement precision, a first sensing speed resolution, a first sensing quality of service QoS requirement, a first sensing location point, a first sensing user equipment UE identifier, first sensing time information, first sensing object identification accuracy, a false alarm rate of first sensing object identification, first sensing data precision, a first sensing data update frequency, a first sensing dimension indication, and a first sensing feedback manner.

10. The method according to any one of claims 2 to 9, wherein the request message carries a sensing requester identifier and/or a sensing application identifier of the first sensing service.

11. The method according to any one of claims 1 to 10, wherein the sensing control request message comprises sensing control information, and the sensing control information is used to control the second sensing network element to perform the sensing operation indicated by the sensing control information.

12. The method according to claim 11, wherein the sensing control information comprises one or more of the following:
a second sensing distance, a second sensing region, a second sensing speed range, a second sensing distance resolution, second sensing angle measurement precision, a second sensing speed resolution, a second sensing QoS requirement, a second sensing location point, a second sensing UE identifier, second sensing time information, second sensing object identification accuracy, a false alarm rate of second sensing object identification, second sensing data precision, a second sensing data update frequency, a second sensing dimension indication, a sensing detection periodicity, and a second sensing feedback manner.

13. The method according to claim 11 or 12, wherein the method further comprises:
obtaining, by the first sensing network element, the sensing control information based on the service type and/or the service requirement of the first sensing service.

14. The method according to claim 13, wherein the obtaining, by the first sensing network element, the sensing control information based on the service type and/or the service requirement of the first sensing service comprises:
performing, by the first sensing network element, one or more of the following operations based on the service type and/or the service requirement of the first sensing service, to obtain the sensing control information:
obtaining, by the first sensing network element, the second sensing distance based on the first sensing distance;
obtaining, by the first sensing network element, the second sensing region based on the first sensing region;
obtaining, by the first sensing network element, the second sensing location point based on the first sensing location point;
obtaining, by the first sensing network element, the second sensing UE identifier based on the first sensing UE identifier;
obtaining, by the first sensing network element, the second sensing time information based on the first sensing time information;
obtaining, by the first sensing network element, the second sensing feedback manner based on the first sensing feedback manner; and
obtaining, by the first sensing network element, a second feedback periodicity based on a first feedback periodicity.

15. The method according to claim 13, wherein the obtaining, by the first sensing network element, the sensing control information based on the service type and/or the service requirement of the first sensing service comprises:
obtaining, by the first sensing network element, the second sensing QoS requirement based on the first sensing QoS requirement; or
obtaining, by the first sensing network element, the second sensing QoS requirement based on the service type of the first sensing service.

16. The method according to any one of claims 12 to 15, wherein the method further comprises:
obtaining, by the first sensing network element, the sensing detection periodicity based on one or more of the following:
the service type of the first sensing service, the first sensing QoS requirement, the first sensing object identification accuracy, the false alarm rate of the first sensing object identification, the first sensing data precision, and the first sensing data update frequency.

17. The method according to any one of claims 12 to 15, wherein the method further comprises:
obtaining, by the first sensing network element, the sensing detection periodicity based on one or more of the following:
the service type of the first sensing service, the second sensing QoS requirement, the first sensing object identification accuracy, the false alarm rate of the first sensing object identification, the first sensing data precision, and the first sensing data update frequency.

18. The method according to any one of claims 9 to 17, wherein the method further comprises:
performing, by the first sensing network element, one or more of the following operations:
obtaining, by the first sensing network element, the second sensing distance resolution based on the first sensing distance resolution;
obtaining, by the first sensing network element, the second sensing angle measurement precision based on the first sensing angle measurement precision;
obtaining, by the first sensing network element, the second sensing speed resolution based on the first sensing speed resolution;
obtaining, by the first sensing network element, the second sensing object identification accuracy based on the first sensing object identification accuracy; and
obtaining, by the first sensing network element, the false alarm rate of the second sensing object identification based on the false alarm rate of the first sensing object identification.

19. The method according to any one of claims 9 to 18, wherein the method further comprises:
obtaining, by the first sensing network element, one or more of the following based on one or more of the first sensing QoS requirement, the first sensing distance, the first sensing region, the first sensing speed range, the first sensing object identification accuracy, the false alarm rate of the first sensing object identification, the first sensing data precision, and the first sensing data update frequency:
the second sensing distance resolution, the second sensing angle measurement precision, the second sensing speed resolution, the second sensing object identification accuracy, and the false alarm rate of the second sensing object identification.

20. The method according to any one of claims 11 to 19, wherein the sensing control information comprises:
a region sensing indication; or
a region sensing indication and the second sensing region.

21. The method according to any one of claims 11 to 19, wherein the sensing control information comprises:
a UE sensing indication and the second sensing UE identifier;
a UE sensing indication and UE location information; or
a UE sensing indication, the second sensing UE identifier, and UE location information.

22. The method according to any one of claims 11 to 19, wherein the sensing control information comprises:
a continuous tracking indication;
a continuous tracking indication and the second sensing UE identifier;
a continuous tracking indication and location information of a target object; or
a continuous tracking indication and the second sensing region.

23. The method according to any one of claims 1 to 21, wherein the first sensing data is one of the following data obtained based on an echo signal:
a time-domain digital signal, distance-speed spectrum information, location information and a speed value of a scattering point, and location information and a speed value of a target object.

24. The method according to any one of claims 1 to 23, wherein a manner of obtaining the first sensing data comprises:
obtaining the first sensing data based on the echo signal;
obtaining the time-domain digital signal based on the echo signal, and obtaining the first sensing data based on the time-domain digital signal;
obtaining the distance-speed spectrum information based on the echo signal, and obtaining the first sensing data based on the distance-speed spectrum information;
obtaining the location information and the speed value of the scattering point based on the echo signal, and obtaining the first sensing data based on the location information and the speed value of the scattering point; or
obtaining the location information and the speed value of the target object based on the echo signal, and obtaining the first sensing data based on the location information and the speed value of the target object.

25. The method according to any one of claims 2 to 24, wherein the first network element is one of the following network elements:
a network exposure function network element, an access and mobility management function network element, an application function network element, an application server AS, or the terminal device.

26. The method according to any one of claims 1 to 25, wherein the second sensing network element is a radio access network device or a terminal device.

27. A method for providing a communication sensing service, comprising:
receiving, by a second sensing network element, a sensing control request message from a first sensing network element, wherein the sensing control request message is used to request the second sensing network element to perform a sensing operation;
performing, by the second sensing network element, the sensing operation based on the sensing control request message, to obtain first sensing data; and
sending, by the second sensing network element, the first sensing data to the first sensing network element.

28. The method according to claim 27, wherein the sensing control request message comprises sensing control information, and the sensing control information is used to control the second sensing network element to perform the sensing operation indicated by the sensing control information.

29. The method according to claim 28, wherein the sensing control information comprises one or more of the following:
a second sensing distance, a second sensing region, a second sensing speed range, a second sensing distance resolution, second sensing angle measurement precision, a second sensing speed resolution, a second sensing QoS requirement, a second sensing location point, a second sensing UE identifier, second sensing time information, second sensing object identification accuracy, a false alarm rate of second sensing object identification, second sensing data precision, a second sensing data update frequency, a second sensing dimension indication, a sensing detection periodicity, and a second sensing feedback manner.

30. The method according to claim 28 or 29, wherein the sensing control information comprises:
a region sensing indication; or
a region sensing indication and the second sensing region.

31. The method according to claim 28 or 29, wherein the sensing control information comprises:
a UE sensing indication and the second sensing UE identifier;
a UE sensing indication and UE location information; or
a UE sensing indication, the second sensing UE identifier, and UE location information.

32. The method according to claim 28 or 29, wherein the sensing control information comprises:
a continuous tracking indication;
a continuous tracking indication and the second sensing UE identifier; or
a continuous tracking indication and the second sensing region.

33. The method according to any one of claims 27 to 32, wherein the first sensing data is one of the following data obtained based on an echo signal:
a time-domain digital signal, distance-speed spectrum information, location information and a speed value of a scattering point, and location information and a speed value of a target object.

34. The method according to any one of claims 27 to 33, wherein the second sensing network element is a radio access network device or a terminal device.

35. A method for providing a communication sensing service, comprising:
sending, by a first sensing network element, a sensing control request message to a second sensing network element, wherein the sensing control request message is used to request the second sensing network element to perform a sensing operation;
receiving, by the second sensing network element, the sensing control request message from the first sensing network element;
performing, by the second sensing network element, the sensing operation based on the sensing control request message, to obtain first sensing data;
sending, by the second sensing network element, the first sensing data to the first sensing network element;
receiving, by the first sensing network element, the first sensing data from the second sensing network element; and
providing, by the first sensing network element, a first sensing service based on the first sensing data.

36. The method according to claim 35, wherein the method further comprises:
sending, by a first network element, a request message to the first sensing network element, wherein the request message is used to request the first sensing service; and
receiving, by the first sensing network element, the request message from the first network element; and
the providing, by the first sensing network element, a first sensing service based on the first sensing data comprises:
sending, by the first sensing network element, second sensing data of the first sensing service to the first network element based on the first sensing data; and
receiving, by the first network element, the second sensing data from the first sensing network element.

37. The method according to claim 36, wherein the second sensing data is the first sensing data, or the second sensing data is obtained based on the first sensing data.

38. A sensing network element, comprising:
a sending unit, configured to send a sensing control request message to a second sensing network element, wherein the sensing control request message is used to request the second sensing network element to perform a sensing operation;
a receiving unit, configured to receive first sensing data from the second sensing network element; and
a processing unit, configured to provide a first sensing service based on the first sensing data.

39. A sensing network element, comprising:
a receiving unit, configured to receive a sensing control request message from a first sensing network element, wherein the sensing control request message is used to request the sensing network element to perform a sensing operation;
a processing unit, configured to perform the sensing operation based on the sensing control request message, to obtain first sensing data; and
a sending unit, configured to send the first sensing data to the first sensing network element.

40. A system for providing a communication sensing service, comprising the sensing network element according to claim 38 and the sensing network element according to claim 39.

41. The system according to claim 40, further comprising a first network element, wherein the first network element is configured to send a request message to a first sensing network element, wherein the request message is used to request a first sensing service; and
the first network element is further configured to receive first sensing data from the first sensing network element.
